# EUROPEAN PATENT SPECIFICATION

(11) **EP 3 797 517 B1**
(45) Date of publication and mention of the grant of the patent: **16.08.2023**
(21) Application number: 19855851.2
(22) Date of filing: 30.08.2019
(51) Int. Cl.: H04N 19/96, H04N 19/119, H04N 19/186, H04N 19/463, H04N 19/70

(54) **AN ENCODER, A DECODER AND CORRESPONDING METHODS USING A PALETTE CODING**
CODIERER, DECODIERER UND ENTSPRECHENDE VERFAHREN MITTELS PALETTENCODIERUNG
CODEUR, DÉCODEUR ET PROCÉDÉS CORRESPONDANTS UTILISANT UN CODAGE DE PALETTE

(30) Priority: 30.08.2018 US 201862725132 P; 23.12.2018 US 201862784537 P; 28.12.2018 US 201862786314 P
(43) Date of publication of application: 31.03.2021
(73) Proprietor: HUAWEI TECHNOLOGIES CO., LTD., Shenzhen, Guangdong 518129 (CN)
(72) Inventor: CHERNYAK, Roman, Moscow, 127106 (RU); IKONIN, Sergey Yurievich, Moscow, 127106 (RU); CHEN, Jianle, Santa Clara, California 95050 (US)
(74) Representative: Huawei European IPR
(86) International application number: PCT/CN2019/103754
(87) International publication number: WO 2020/043194

(56) References cited:
- WO-A1-2018/142795
- CN-A- 105 009 589
- CN-A- 107 079 160
- US-A1- 2016 360 198
- BENJAMIN BROSS ET AL: "Versatile Video Coding (Draft 2)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K1001-v4; JVET-K1001 17 August 2018 (2018-08-17), pages 1-85, XP030193545, Retrieved from the Internet: URL:http://phenix.int-evry.fr/jvet/doc_end _user/documents/11_Ljubljana/wg11/JVET-K10 01-v4.zip JVET-K1001-v4.docx
- T-D CHUANG ET AL: "CE1-related: Separate tree partitioning at 64x64-luma/32x32-chroma unit level", 123. MPEG MEETING; 20180716 - 20180720; LJUBLJANA; (MOTION PICTURE EXPERT GROUP OR ISO/IEC JTC1/SC29/WG11), , no. m43159 17 July 2018 (2018-07-17), XP030197456, Retrieved from the Internet: URL:http://phenix.int-evry.fr/mpeg/doc_end _user/documents/123_Ljubljana/wg11/m43159- JVET-K0230-v4-JVET-K0230-v4.zip JVET-K0230-v1.docx [retrieved on 2018-07-17]
- CHERNYAK (HUAWEI) R ET AL: "CE15-related: Separate Palette Coding for Luma and Chroma components", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0427 25 September 2018 (2018-09-25), XP030193920, Retrieved from the Internet: URL:http://phenix.int-evry.fr/jvet/doc_end _user/documents/12_Macao/wg11/JVET-L0427-v 1.zip JVET-L0427-v1.docx [retrieved on 2018-09-25]

## Description

### TECHNICAL FIELD

Embodiments of the present application (disclosure) generally relate to the field of picture processing and more particularly to Palette coding in case of Separate Tree approach is used by picture processing apparatuses and methods for encoding and decoding.

### BACKGROUND

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

The amount of video data needed to depict even a relatively short video can be substantial, which may result in difficulties when the data is to be streamed or otherwise communicated across a communications network with limited bandwidth capacity. Thus, video data is generally compressed before being communicated across modern day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in picture quality are desirable.

BENJAMIN BROSS ET AL: "Versatile Video Coding (Draft 2)", 11. JVET MEETING; 20180711 - 20180718; LJUBLJANA; (THE JOINTVIDEO EXPLORATION TEAM OF ISO/IEC JTC1/SC29/WG11 AND ITU-T SG.16) discloses a general decoding process for coding units coded in intra prediction mode in section 8.2.1, the decoding process using single and dual tree partitioning.

T-D CHUANG ET AL: "CE1-related: Separate tree partitioning at 64x64-luma/32x32-chroma unit level", 123. MPEG MEETING; 20180716 - 20180720; LJUBLJANA; (MOTIONPICTURE EXPERT GROUP OR ISO/IEC JTC1/SC29/WG11) discloses syntax and data processing order of separate tree partitioning.

### SUMMARY

Embodiments of the present application provide apparatuses and methods for encoding and decoding according to the independent claims.

The foregoing and other objects are achieved by the subject matter of the independent claims. Further implementation forms are apparent from the dependent claims, the description and the figures. The present invention is set out by the set of appended claims. In the following, parts of the description and drawing referring to embodiments, examples or implementations, which are not covered by the claims are not presented as embodiments of the invention, but as illustrative examples useful for understanding the invention.

According to an embodiment, a method of decoding implemented by a decoding device, according to claim 1 is provided.

It is noted that the associated palette coding information is associated with the subject CU. The subject CU may be denoted also as the current CU, meaning that it is the CU currently processed. One of the advantages of decoding subject CU as well as the palette coding information based on the partitioning type is possibility of efficient syntax. Since the palette coding information may differ for the two partitioning types, the subject CU coded with the corresponding palette will also differ. Thus, by considering the partitioning type when coding the subject CU and the palette coding information, a more efficient encoding and/or binarization is possible.

The separate partitioning type, in which a subject coding unit is partitioned into a separate luma CU including a luma CB only and a chroma CU including two chroma CBs only, means that there are two separate partitioning trees, a tree for the luma coding unit and a tree for the two (in general one or more) components (coding blocks) of the chroma coding unit. This also means that the subject coding unit may include luma coding unit(s) and chroma coding unit(s) which do not correspond to each other in size and/or location. Similarly, the term "partitioned into a single CU including one luma coding block, CB, and two chroma CBs" above does not necessarily mean that the CU may not be further split (partitioned) to smaller units. It rather means that all components (Y, Cb, Cr) share the same partitioning tree.

The associated palette coding information comprises palette coding info syntax elements, and the palette coding info syntax elements are signaled in the bitstream based on the partitioning type of the subject CU.

For example, at the decoder, the palette coding info syntax elements together with the partitioning type are used to determine the palette and to decode the subject CU accordingly.

For instance, when the partitioning type of the subject CU is the single partitioning type, the palette coding info syntax elements are signaled in the bitstream for the subject CU once for Y, Cb, Cr components together.

Here the term "once for Y, Cb, Cr components together" means that the palette coding info syntax elements are common fr the three components. For example, the palette coding information (info) syntax elements may include the entries of palette look-up table or a reference to one look-up table among look-up tables and the look-up table(s) is/are common for the Y, Cb, Cr components. It is noted that in this example, the color components are Y, Cb, Cr. However, the present disclosure is not limited thereto, and any other color space such as RGB, YUV, or the like may be used. Moreover, there may be more or less than 3 components in the color space.

In an example, when the partitioning type of the subject CU is the separate partitioning type, the palette coding info syntax elements are signaled in the bitstream for the subject CU twice: once for Y component and once for Cb-Cr components together (coupled).

In this example, a separate (separate from other color components) palette for Y component may be provided and the corresponding info signaled. The decoder than extracts the signaled palette coding info syntax elements and derives therefrom the palette for Y component.

In addition to any of the above mentioned embodiments and examples, in another embodiment, when the partitioning type of the subject CU is the separate partitioning type, the palette coding info syntax elements are signaled in the bitstream for the luma CU once for Y component.

In this embodiment, the palette coding info syntax elements for the Cb-Cr components may be provided to indicate joint Cb-Cr palette entries (e.g. one palette index refers to a combination of Cb and Cr component values) and the palette coding info syntax elements for the Y component may be provided separately as mentioned above.

In an embodiment, when the partitioning type of the subject CU is the separate partitioning type, the palette coding info syntax elements are signaled in the bitstream once for Cb-Cr components together in the chroma CU.

The palette coding info syntax elements include any of or any combination of palette(s) predictor vector, palette(s)' sizes, palette(s), escape flag(s), indexes map(s).

In addition or alternatively, when the partitioning type of the subject CU is the separate partitioning type, the palette coding info syntax elements signaling for the chroma CU depends on a palette coding control flag of the luma CU of the subject CU.

Here, the luma CU of the subject CU refers to a co-located luma CU(s). A co-located luma CU(s) refer to luma CU(s) which is/are (at least in part) on the same sample positions as the chroma CU (of the subject CU). The palette coding control flag may indicate whether or not palette coding is applied for the respective luma or chroma CU. It is noted that the subject CU in any of the embodiments herein may be a coding tree unit or may be coding unitincluded in a coding tree unit.

Alternatively or in addition, when the partitioning type of the subject CU is the separate partitioning type, the palette coding info syntax elements signaling for the chroma CU depends on the palette coding control flag of the luma CU of the subject CU according to following rule: if all luma CBs of the subject CU have palette coding control flag equal to 1, then signal, in the bitstream, a palette coding control flag for the chroma CBs. Otherwise, do not use palette coding for the chroma CBs.

In other words, if all luma CBs overlapping (or included in) the croma CB have flag set to 1, it means that all luma CBs use the palette coding. In this case, the chroma CB flab may be signaled. Otherwise the flag for chroma CB may be inferred as being 0. It is noted that the convention may be reversed, i.e. the palette coding control flag in the above cases may be actually indicated in the bitstream as 0 instead of 1 and vide-versa. In general, the palette coding control flag can take one of two different values, a first value and a second value. The above "1" corresponds to the forst value and "0" (or "otherwise") to the seconf value.

In another example, when the partitioning type of the subject CU is the separate partitioning type, the palette coding info syntax elements signaling for the chroma CU depends on the palette coding control flag of the luma CU of the subject CU according to following rule: if all luma CBs of the subject CU have palette coding control flag equal to 1, then infer a palette coding control flag for the chroma CBs to be equal 1, and signal, in the bitstream, the palette coding info syntax elements for the chroma CBs. Otherwise signal, in the bitstream, the palette coding control flag for the chroma CBs.

According to an embodiment, a method of coding implemented by an encoding device, according to claim 9 is provided.

Moreover, a program is provided, stored on a non-transitory (storage) medium and including code with instructions which, when executed by one or more processors, cause the one or more processors to perform any of the above-mentioned methods.

According to an embodiment, a decoding device according to claim 11 is provided.

According to an embodiment, an encoding device according to claim 14 is provided.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention are described in more detail with reference to the attached figures and drawings, in which:
- FIG. 1A: is a block diagram showing an example of a video coding system configured to implement embodiments of the invention;
- FIG. 1B: is a block diagram showing another example of a video coding system configured to implement embodiments of the invention;
- FIG. 2: is a block diagram showing an example of a video encoder configured to implement embodiments of the invention;
- FIG. 3: is a block diagram showing an example structure of a video decoder configured to implement embodiments of the invention;
- FIG. 4: is a block diagram illustrating an example of an encoding apparatus or a decoding apparatus;
- FIG. 5: is a block diagram illustrating another example of an encoding apparatus or a decoding apparatus.
- FIG. 6: is a block diagram showing an example structure of a content supply system 3100 which realizes a content delivery service.

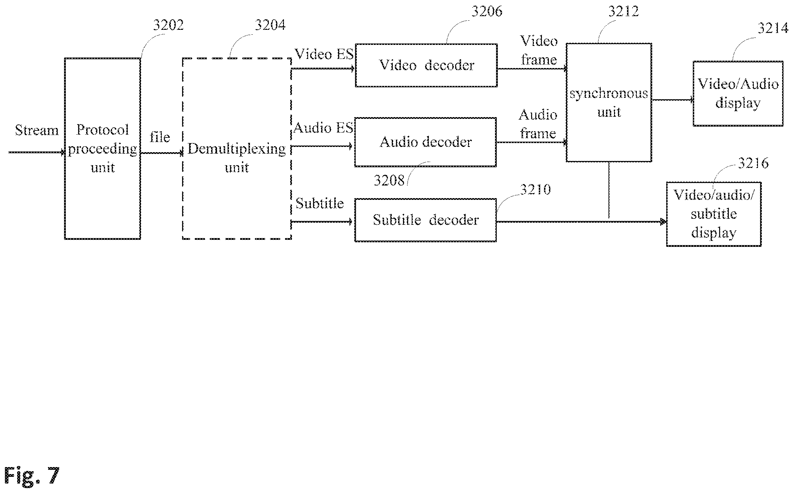

- FIG. 7: is a block diagram showing a structure of an example of a terminal device.

In the following identical reference signs refer to identical or at least functionally equivalent features if not explicitly specified otherwise.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term "picture" the term "frame" or "image" may be used as synonyms in the field of video coding. Video coding (or coding in general) comprises two parts video encoding and video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general) shall be understood to relate to "encoding" or "decoding" of video pictures or respective video sequences. The combination of the encoding part and the decoding part is also referred to as CODEC (Coding and Decoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and/or temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is applied to the encoded or compressed block to reconstruct the current block for representation. Furthermore, the encoder duplicates the decoder processing loop such that both will generate identical predictions (e.g. intra- and inter predictions) and/or re-constructions for processing, i.e. coding, the subsequent blocks.

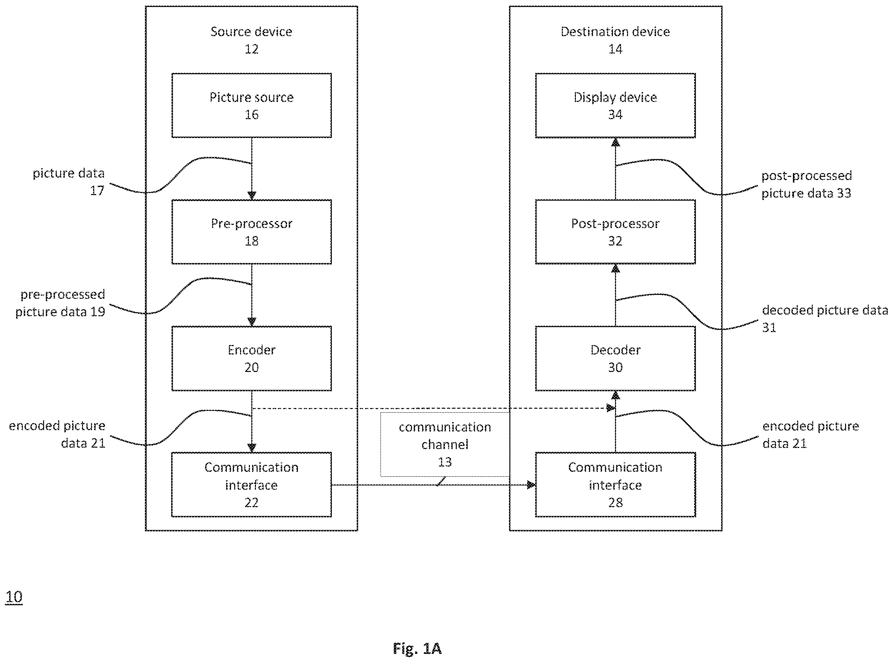

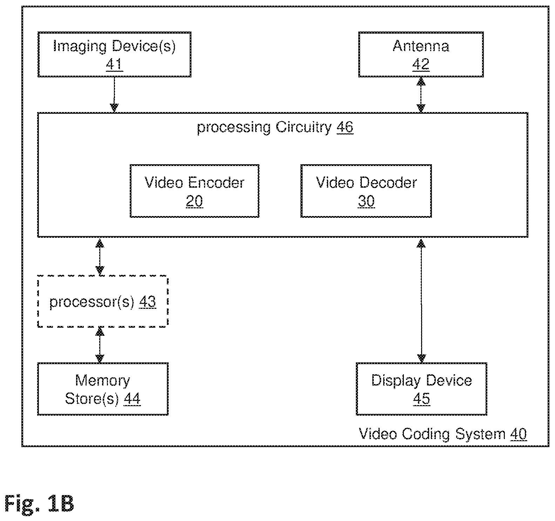

In the following embodiments of a video coding system 10, a video encoder 20 and a video decoder 30 are described based on Figs. 1 to 3.

Fig. 1A is a schematic block diagram illustrating an example coding system 10, e.g. a video coding system 10 (or short coding system 10) that may utilize techniques of this present application. Video encoder 20 (or short encoder 20) and video decoder 30 (or short decoder 30) of video coding system 10 represent examples of devices that may be configured to perform techniques in accordance with various examples described in the present application.

As shown in FIG. 1A, the coding system 10 comprises a source device 12 configured to provide encoded picture data 21 e.g. to a destination device 14 for decoding the encoded picture data 13.

The source device 12 comprises an encoder 20, and may additionally, i.e. optionally, comprise a picture source 16, a pre-processor (or pre-processing unit) 18, e.g. a picture pre-processor 18, and a communication interface or communication unit 22.

The picture source 16 may comprise or be any kind of picture capturing device, for example a camera for capturing a real-world picture, and/or any kind of a picture generating device, for example a computer-graphics processor for generating a computer animated picture, or any kind of other device for obtaining and/or providing a real-world picture, a computer generated picture (e.g. a screen content, a virtual reality (VR) picture) and/or any combination thereof (e.g. an augmented reality (AR) picture). The picture source may be any kind of memory or storage storing any of the aforementioned pictures.

In distinction to the pre-processor 18 and the processing performed by the pre-processing unit 18, the picture or picture data 17 may also be referred to as raw picture or raw picture data 17.

Pre-processor 18 is configured to receive the (raw) picture data 17 and to perform pre-processing on the picture data 17 to obtain a pre-processed picture 19 or pre-processed picture data 19. Pre-processing performed by the pre-processor 18 may, e.g., comprise trimming, color format conversion (e.g. from RGB to YCbCr), color correction, or de-noising. It can be understood that the pre-processing unit 18 may be optional component.

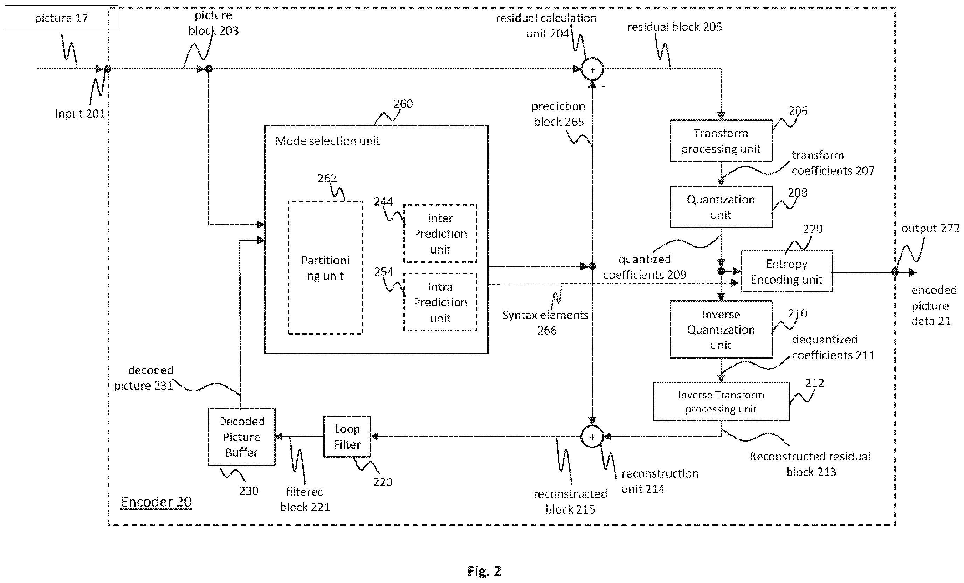

The video encoder 20 is configured to receive the pre-processed picture data 19 and provide encoded picture data 21 (further details will be described below, e.g., based on Fig. 2).

Communication interface 22 of the source device 12 may be configured to receive the encoded picture data 21 and to transmit the encoded picture data 21 (or any further processed version thereof) over communication channel 13 to another device, e.g. the destination device 14 or any other device, for storage or direct reconstruction.

The destination device 14 comprises a decoder 30 (e.g. a video decoder 30), and may additionally, i.e. optionally, comprise a communication interface or communication unit 28, a post-processor 32 (or post-processing unit 32) and a display device 34.

The communication interface 28 of the destination device 14 is configured receive the encoded picture data 21 (or any further processed version thereof), e.g. directly from the source device 12 or from any other source, e.g. a storage device, e.g. an encoded picture data storage device, and provide the encoded picture data 21 to the decoder 30.

The communication interface 22 and the communication interface 28 may be configured to transmit or receive the encoded picture data 21 or encoded data 13 via a direct communication link between the source device 12 and the destination device 14, e.g. a direct wired or wireless connection, or via any kind of network, e.g. a wired or wireless network or any combination thereof, or any kind of private and public network, or any kind of combination thereof.

The communication interface 22 may be, e.g., configured to package the encoded picture data 21 into an appropriate format, e.g. packets, and/or process the encoded picture data using any kind of transmission encoding or processing for transmission over a communication link or communication network.

The communication interface 28, forming the counterpart of the communication interface 22, may be, e.g., configured to receive the transmitted data and process the transmission data using any kind of corresponding transmission decoding or processing and/or de-packaging to obtain the encoded picture data 21.

Both, communication interface 22 and communication interface 28 may be configured as unidirectional communication interfaces as indicated by the arrow for the communication channel 13 in Fig. 1A pointing from the source device 12 to the destination device 14, or bi-directional communication interfaces, and may be configured, e.g. to send and receive messages, e.g. to set up a connection, to acknowledge and exchange any other information related to the communication link and/or data transmission, e.g. encoded picture data transmission.

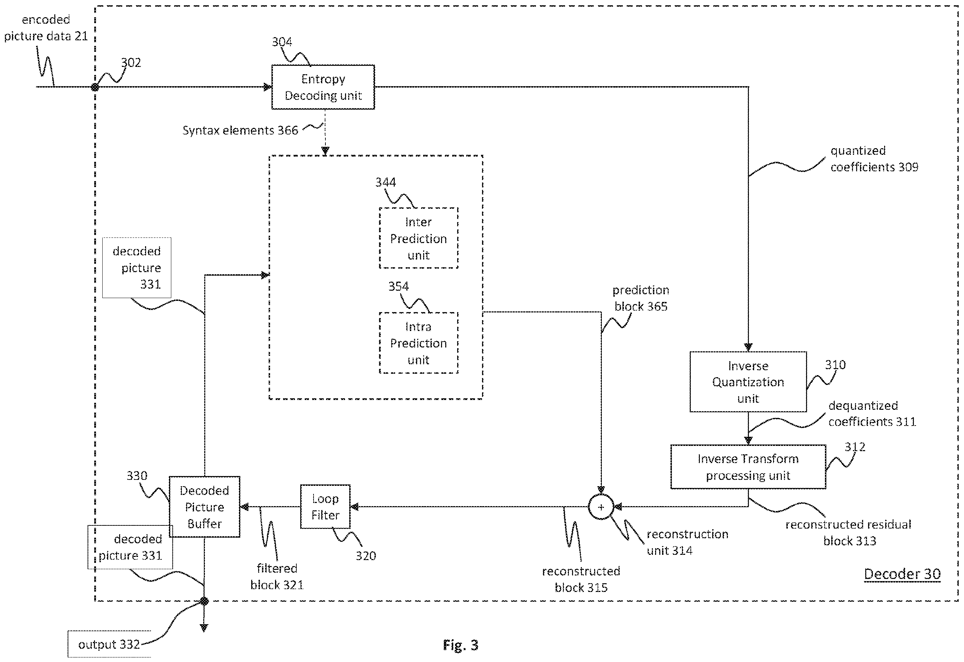

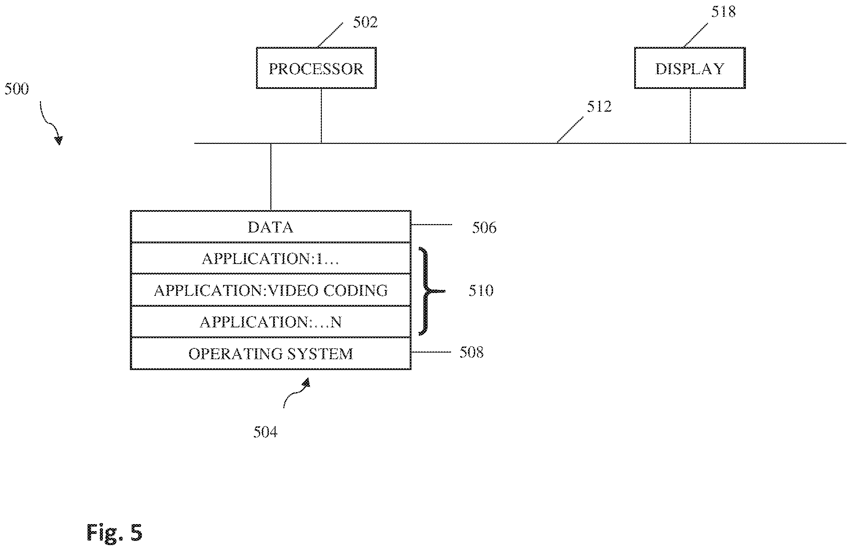

The decoder 30 is configured to receive the encoded picture data 21 and provide decoded picture data 31 or a decoded picture 31 (further details will be described below, e.g., based on Fig. 3 or Fig. 5).

The post-processor 32 of destination device 14 is configured to post-process the decoded picture data 31 (also called reconstructed picture data), e.g. the decoded picture 31, to obtain post-processed picture data 33, e.g. a post-processed picture 33. The post-processing performed by the post-processing unit 32 may comprise, e.g. color format conversion (e.g. from YCbCr to RGB), color correction, trimming, or re-sampling, or any other processing, e.g. for preparing the decoded picture data 31 for display, e.g. by display device 34.

The display device 34 of the destination device 14 is configured to receive the post-processed picture data 33 for displaying the picture, e.g. to a user or viewer. The display device 34 may be or comprise any kind of display for representing the reconstructed picture, e.g. an integrated or external display or monitor. The displays may, e.g. comprise liquid crystal displays (LCD), organic light emitting diodes (OLED) displays, plasma displays, projectors , micro LED displays, liquid crystal on silicon (LCoS), digital light processor (DLP) or any kind of other display.

Although Fig. 1A depicts the source device 12 and the destination device 14 as separate devices, embodiments of devices may also comprise both or both functionalities, the source device 12 or corresponding functionality and the destination device 14 or corresponding functionality. In such embodiments the source device 12 or corresponding functionality and the destination device 14 or corresponding functionality may be implemented using the same hardware and/or software or by separate hardware and/or software or any combination thereof.

As will be apparent for the skilled person based on the description, the existence and (exact) split of functionalities of the different units or functionalities within the source device 12 and/or destination device 14 as shown in Fig. 1A may vary depending on the actual device and application.

The encoder 20 (e.g. a video encoder 20) or the decoder 30 (e.g. a video decoder 30) or both encoder 20 and decoder 30 may be implemented via processing circuitry as shown in Fig. 1B, such as one or more microprocessors, digital signal processors (DSPs), application-specific integrated circuits (ASICs), field-programmable gate arrays (FPGAs), discrete logic, hardware, video coding dedicated or any combinations thereof. The encoder 20 may be implemented via processing circuitry 46 to embody the various modules as discussed with respect to encoder 20of FIG. 2 and/or any other encoder system or subsystem described herein. The decoder 30 may be implemented via processing circuitry 46 to embody the various modules as discussed with respect to decoder 30 of FIG. 3 and/or any other decoder system or subsystem described herein. The processing circuitry may be configured to perform the various operations as discussed later. As shown in fig. 5, if the techniques are implemented partially in software, a device may store instructions for the software in a suitable, non-transitory computer-readable storage medium and may execute the instructions in hardware using one or more processors to perform the techniques of this disclosure. Either of video encoder 20 and video decoder 30 may be integrated as part of a combined encoder/decoder (CODEC) in a single device, for example, as shown in Fig. 1B.

Source device 12 and destination device 14 may comprise any of a wide range of devices, including any kind of handheld or stationary devices, e.g. notebook or laptop computers, mobile phones, smart phones, tablets or tablet computers, cameras, desktop computers, set-top boxes, televisions, display devices, digital media players, video gaming consoles, video streaming devices(such as content services servers or content delivery servers), broadcast receiver device, broadcast transmitter device, or the like and may use no or any kind of operating system. In some cases, the source device 12 and the destination device 14 may be equipped for wireless communication. Thus, the source device 12 and the destination device 14 may be wireless communication devices.

In some cases, video coding system 10 illustrated in Fig. 1A is merely an example and the techniques of the present application may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In some examples, the encoding and decoding is performed by devices that do not communicate with one another, but simply encode data to memory and/or retrieve and decode data from memory.

For convenience of description, embodiments of the invention are described herein, for example, by reference to High-Efficiency Video Coding (HEVC) or to the reference software of Versatile Video coding (VVC), the next generation video coding standard developed by the Joint Collaboration Team on Video Coding (JCT-VC) of ITU-T Video Coding Experts Group (VCEG) and ISO/IEC Motion Picture Experts Group (MPEG). One of ordinary skill in the art will understand that embodiments of the invention are not limited to HEVC or VVC.

### Encoder and Encoding Method

Fig. 2 shows a schematic block diagram of an example video encoder 20 that is configured to implement the techniques of the present application. In the example of Fig. 2, the video encoder 20 comprises an input 201 (or input interface 201), a residual calculation unit 204, a transform processing unit 206, a quantization unit 208, an inverse quantization unit 210, and inverse transform processing unit 212, a reconstruction unit 214, a loop filter unit 220, a decoded picture buffer (DPB) 230, a mode selection unit 260, an entropy encoding unit 270 and an output 272 (or output interface 272). The mode selection unit 260 may include an inter prediction unit 244, an intra prediction unit 254 and a partitioning unit 262. Inter prediction unit 244 may include a motion estimation unit and a motion compensation unit (not shown). A video encoder 20 as shown in Fig. 2 may also be referred to as hybrid video encoder or a video encoder according to a hybrid video codec.

The residual calculation unit 204, the transform processing unit 206, the quantization unit 208, the mode selection unit 260 may be referred to as forming a forward signal path of the encoder 20, whereas the inverse quantization unit 210, the inverse transform processing unit 212, the reconstruction unit 214, the buffer 216, the loop filter 220, the decoded picture buffer (DPB) 230, the inter prediction unit 244 and the intra-prediction unit 254 may be referred to as forming a backward signal path of the video encoder 20, wherein the backward signal path of the video encoder 20 corresponds to the signal path of the decoder (see video decoder 30 in Fig. 3). The inverse quantization unit 210, the inverse transform processing unit 212, the reconstruction unit 214, the loop filter 220, the decoded picture buffer (DPB) 230, the inter prediction unit 244 and the intra-prediction unit 254 are also referred to forming the "built-in decoder" of video encoder 20.

### Pictures & Picture Partitioning (Pictures & Blocks)

The encoder 20 may be configured to receive, e.g. via input 201, a picture 17 (or picture data 17), e.g. picture of a sequence of pictures forming a video or video sequence. The received picture or picture data may also be a pre-processed picture 19 (or pre-processed picture data 19). For sake of simplicity the following description refers to the picture 17. The picture 17 may also be referred to as current picture or picture to be coded (in particular in video coding to distinguish the current picture from other pictures, e.g. previously encoded and/or decoded pictures of the same video sequence, i.e. the video sequence which also comprises the current picture).

A (digital) picture is or can be regarded as a two-dimensional array or matrix of samples with intensity values. A sample in the array may also be referred to as pixel (short form of picture element) or a pel. The number of samples in horizontal and vertical direction (or axis) of the array or picture define the size and/or resolution of the picture. For representation of color, typically three color components are employed, i.e. the picture may be represented or include three sample arrays. In RBG format or color space a picture comprises a corresponding red, green and blue sample array. However, in video coding each pixel is typically represented in a luminance and chrominance format or color space, e.g. YCbCr, which comprises a luminance component indicated by Y (sometimes also L is used instead) and two chrominance components indicated by Cb and Cr. The luminance (or short luma) component Y represents the brightness or grey level intensity (e.g. like in a grey-scale picture), while the two chrominance (or short chroma) components Cb and Cr represent the chromaticity or color information components. Accordingly, a picture in YCbCr format comprises a luminance sample array of luminance sample values (Y), and two chrominance sample arrays of chrominance values (Cb and Cr). Pictures in RGB format may be converted or transformed into YCbCr format and vice versa, the process is also known as color transformation or conversion. If a picture is monochrome, the picture may comprise only a luminance sample array. Accordingly, a picture may be, for example, an array of luma samples in monochrome format or an array of luma samples and two corresponding arrays of chroma samples in 4:2:0, 4:2:2, and 4:4:4 colour format.

Embodiments of the video encoder 20 may comprise a picture partitioning unit (not depicted in Fig. 2) configured to partition the picture 17 into a plurality of (typically non-overlapping) picture blocks 203. These blocks may also be referred to as root blocks, macro blocks (H.264/AVC) or coding tree blocks (CTB) or coding tree units (CTU) (H.265/HEVC and VVC). The picture partitioning unit may be configured to use the same block size for all pictures of a video sequence and the corresponding grid defining the block size, or to change the block size between pictures or subsets or groups of pictures, and partition each picture into the corresponding blocks. In case of non-monochrome picture 17, the picture partitioning unit may be configured to use either joint (single) or separate (dual) partitioning for luma and for chroma blocks. Such approach is used e.g. in VVC and called Separate Tree or Dual Tree partitioning. If Dual Tree is used at certain CU, it can be either luma CU with one luma coding block (CB) or chroma CU with two chroma coding blocks (CBs). It should be noted that normally Dual Tree is applied based on predefined conditions e.g. slice type, block size, etc. If the conditions are no satisfied, Single Tree partitioning is used at CU, where CU comprises of one luma and two chroma coding blocks (CBs) is applied.

In further embodiments, the video encoder may be configured to receive directly a block 203 of the picture 17, e.g. one, several or all blocks forming the picture 17. The picture block 203 may also be referred to as current picture block or picture block to be coded.

Like the picture 17, the picture block 203 again is or can be regarded as a two-dimensional array or matrix of samples with intensity values (sample values), although of smaller dimension than the picture 17. In other words, the block 203 may comprise, e.g., one sample array (e.g. a luma array in case of a monochrome picture 17 or in case of a color picture and luma block when dual tree is applied); or two sample arrays (e.g. two chroma arrays in case of a color picture and chroma block when dual tree is applied); or three sample arrays (e.g. a luma and two chroma arrays in case of a color picture 17) or any other number and/or kind of arrays depending on the color format applied. The number of samples in horizontal and vertical direction (or axis) of the block 203 define the size of block 203. Accordingly, a block may, for example, an MxN (M-column by N-row) array of samples, or an MxN array of transform coefficients.

Embodiments of the video encoder 20 as shown in Fig. 2 may be configured encode the picture 17 block by block, e.g. the encoding and prediction is performed per block 203.

### Residual Calculation

The residual calculation unit 204 may be configured to calculate a residual block 205 (also referred to as residual 205) based on the picture block 203 and a prediction block 265 (further details about the prediction block 265 are provided later), e.g. by subtracting sample values of the prediction block 265 from sample values of the picture block 203, sample by sample (pixel by pixel) to obtain the residual block 205 in the sample domain.

### Transform

The transform processing unit 206 may be configured to apply a transform, e.g. a discrete cosine transform (DCT) or discrete sine transform (DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as the transforms specified for H.265/HEVC. Compared to an orthogonal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operations, bit depth of the transform coefficients, tradeoff between accuracy and implementation costs, etc. Specific scaling factors are, for example, specified for the inverse transform, e.g. by inverse transform processing unit 212 (and the corresponding inverse transform, e.g. by inverse transform processing unit 312 at video decoder 30) and corresponding scaling factors for the forward transform, e.g. by transform processing unit 206, at an encoder 20 may be specified accordingly.

Embodiments of the video encoder 20 (respectively transform processing unit 206) may be configured to output transform parameters, e.g. a type of transform or transforms, e.g. directly or encoded or compressed via the entropy encoding unit 270, so that, e.g., the video decoder 30 may receive and use the transform parameters for decoding.

### Quantization

The quantization unit 208 may be configured to quantize the transform coefficients 207 to obtain quantized coefficients 209, e.g. by applying scalar quantization or vector quantization. The quantized coefficients 209 may also be referred to as quantized transform coefficients 209 or quantized residual coefficients 209.

The quantization process may reduce the bit depth associated with some or all of the transform coefficients 207. For example, an n-bit transform coefficient may be rounded down to an m-bit Transform coefficient during quantization, where n is greater than m. The degree of quantization may be modified by adjusting a quantization parameter (QP). For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and a corresponding and/or the inverse dequantization, e.g. by inverse quantization unit 210, may include multiplication by the quantization step size. Embodiments according to some standards, e.g. HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined. Alternatively, customized quantization tables may be used and signaled from an encoder to a decoder, e.g. in a bitstream. The quantization is a lossy operation, wherein the loss increases with increasing quantization step sizes.

Embodiments of the video encoder 20 (respectively quantization unit 208) may be configured to output quantization parameters (QP), e.g. directly or encoded via the entropy encoding unit 270, so that, e.g., the video decoder 30 may receive and apply the quantization parameters for decoding.

### Inverse Quantization

The inverse quantization unit 210 is configured to apply the inverse quantization of the quantization unit 208 on the quantized coefficients to obtain dequantized coefficients 211, e.g. by applying the inverse of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

### Inverse Transform

The inverse transform processing unit 212 is configured to apply the inverse transform of the transform applied by the transform processing unit 206, e.g. an inverse discrete cosine transform (DCT) or inverse discrete sine transform (DST) or other inverse transforms, to obtain a reconstructed residual block 213 (or corresponding dequantized coefficients 213) in the sample domain. The reconstructed residual block 213 may also be referred to as transform block 213.

### Reconstruction

The reconstruction unit 214 (e.g. adder or summer 214) is configured to add the transform block 213 (i.e. reconstructed residual block 213) to the prediction block 265 to obtain a reconstructed block 215 in the sample domain, e.g. by adding - sample by sample - the sample values of the reconstructed residual block 213 and the sample values of the prediction block 265.

### Filtering

The loop filter unit 220 (or short "loop filter" 220), is configured to filter the reconstructed block 215 to obtain a filtered block 221, or in general, to filter reconstructed samples to obtain filtered samples. The loop filter unit is, e.g., configured to smooth pixel transitions, or otherwise improve the video quality. The loop filter unit 220 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 220 is shown in FIG. 2 as being an in loop filter, in other configurations, the loop filter unit 220 may be implemented as a post loop filter. The filtered block 221 may also be referred to as filtered reconstructed block 221.

Embodiments of the video encoder 20 (respectively loop filter unit 220) may be configured to output loop filter parameters (such as sample adaptive offset information), e.g. directly or encoded via the entropy encoding unit 270, so that, e.g., a decoder 30 may receive and apply the same loop filter parameters or respective loop filters for decoding.

### Decoded Picture Buffer

The decoded picture buffer (DPB) 230 may be a memory that stores reference pictures, or in general reference picture data, for encoding video data by video encoder 20. The DPB 230 may be formed by any of a variety of memory devices, such as dynamic random access memory (DRAM), including synchronous DRAM (SDRAM), magnetoresistive RAM (MRAM), resistive RAM (RRAM), or other types of memory devices. The decoded picture buffer (DPB) 230 may be configured to store one or more filtered blocks 221. The decoded picture buffer 230 may be further configured to store other previously filtered blocks, e.g. previously reconstructed and filtered blocks 221, of the same current picture or of different pictures, e.g. previously reconstructed pictures, and may provide complete previously reconstructed, i.e. decoded, pictures (and corresponding reference blocks and samples) and/or a partially reconstructed current picture (and corresponding reference blocks and samples), for example for inter prediction. The decoded picture buffer (DPB) 230 may be also configured to store one or more unfiltered reconstructed blocks 215, or in general unfiltered reconstructed samples, e.g. if the reconstructed block 215 is not filtered by loop filter unit 220, or any other further processed version of the reconstructed blocks or samples.

### Mode Selection (Partitioning & Prediction)

The mode selection unit 260 comprises partitioning unit 262, inter-prediction unit 244 and intra-prediction unit 254, and is configured to receive or obtain original picture data, e.g. an original block 203 (current block 203 of the current picture 17), and reconstructed picture data, e.g. filtered and/or unfiltered reconstructed samples or blocks of the same (current) picture and/or from one or a plurality of previously decoded pictures, e.g. from decoded picture buffer 230 or other buffers (e.g. line buffer, not shown).. The reconstructed picture data is used as reference picture data for prediction, e.g. inter-prediction or intra-prediction, to obtain a prediction block 265 or predictor 265.

Mode selection unit 260 may be configured to determine or select a partitioning for a current block prediction mode (including no partitioning) and a prediction mode (e.g. an intra or inter prediction mode) and generate a corresponding prediction block 265, which is used for the calculation of the residual block 205 and for the reconstruction of the reconstructed block 215.

Embodiments of the mode selection unit 260 may be configured to select the partitioning and the prediction mode (e.g. from those supported by or available for mode selection unit 260), which provide the best match or in other words the minimum residual (minimum residual means better compression for transmission or storage), or a minimum signaling overhead (minimum signaling overhead means better compression for transmission or storage), or which considers or balances both. The mode selection unit 260 may be configured to determine the partitioning and prediction mode based on rate distortion optimization (RDO), i.e. select the prediction mode which provides a minimum rate distortion. Terms like "best", "minimum", "optimum" etc. in this context do not necessarily refer to an overall "best", "minimum", "optimum", etc. but may also refer to the fulfillment of a termination or selection criterion like a value exceeding or falling below a threshold or other constraints leading potentially to a "sub-optimum selection" but reducing complexity and processing time.

In other words, the partitioning unit 262 may be configured to partition the block 203 into smaller block partitions or sub-blocks (which form again blocks), e.g. iteratively using quad-tree-partitioning (QT), binary partitioning (BT) or triple-tree-partitioning (TT) or any combination thereof, and to perform, e.g., the prediction for each of the block partitions or sub-blocks, wherein the mode selection comprises the selection of the tree-structure of the partitioned block 203 and the prediction modes are applied to each of the block partitions or sub-blocks.

In the following the partitioning (e.g. by partitioning unit 260) and prediction processing (by inter-prediction unit 244 and intra-prediction unit 254) performed by an example video encoder 20 will be explained in more detail.

### Partitioning

The partitioning unit 262 may partition (or split) a current block 203 into smaller partitions, e.g. smaller blocks of square or rectangular size. These smaller blocks (which may also be referred to as sub-blocks) may be further partitioned into even smaller partitions. This is also referred to tree-partitioning or hierarchical tree-partitioning, wherein a root block, e.g. at root tree-level 0 (hierarchy-level 0, depth 0), may be recursively partitioned, e.g. partitioned into two or more blocks of a next lower tree-level, e.g. nodes at tree-level 1 (hierarchy-level 1, depth 1), wherein these blocks may be again partitioned into two or more blocks of a next lower level, e.g. tree-level 2 (hierarchy-level 2, depth 2), etc. until the partitioning is terminated, e.g. because a termination criterion is fulfilled, e.g. a maximum tree depth or minimum block size is reached. Blocks which are not further partitioned are also referred to as leaf-blocks or leaf nodes of the tree. A tree using partitioning into two partitions is referred to as binary-tree (BT), a tree using partitioning into three partitions is referred to as ternary-tree (TT), and a tree using partitioning into four partitions is referred to as quad-tree (QT).

As mentioned before, the term "block" as used herein may be a portion, in particular a square or rectangular portion, of a picture. With reference, for example, to HEVC and VVC, the block may be or correspond to a coding tree unit (CTU), a coding unit (CU), prediction unit (PU), and transform unit (TU) and/or to the corresponding blocks, e.g. a coding tree block (CTB), a coding block (CB), a transform block (TB) or prediction block (PB). In case of dual tree the term "block" may be also specified by correspondent component to which it belongs, e.g. "luma block" for block which includes a luma component only or "chroma block" for block which includes chroma components only. With reference, for example, to VVC, the luma block and/or the chroma block may be or correspond to a luma and/or chroma coding tree unit (luma and/or chroma CTU), a luma and/or chroma coding unit (luma and/or chroma CU), a luma and/or chroma prediction unit (luma and/or chroma PU), and a luma and/or chroma transform unit (luma and/or chroma TU) and/or to the corresponding blocks, e.g. a luma and/or chroma coding tree block (luma and/or chroma CTB), a luma and/or chroma coding block (luma and/or chroma CB), a luma and/or chroma transform block (luma and/or chroma TB) or a luma and/or chroma prediction block (luma and/or chroma PB).

For example, a coding tree unit (CTU) may be or comprise a CTB of luma samples, two corresponding CTBs of chroma samples of a picture that has three sample arrays, or a CTB of samples of a monochrome picture or a picture that is coded using three separate colour planes and syntax structures used to code the samples. If dual tree is used a coding tree unit (CTU), a coding tree unit may be or comprise a CTB of luma samples or two CTBs of chroma samples of a picture that has three sample arrays. Correspondingly, a coding tree block (CTB) may be an NxN block of samples for some value of N such that the division of a component into CTBs is a partitioning. A coding unit (CU) may be or comprise a coding block of luma samples, two corresponding coding blocks of chroma samples of a picture that has three sample arrays, or a coding block of samples of a monochrome picture or a picture that is coded using three separate colour planes and syntax structures used to code the samples. Correspondingly a coding block (CB) may be an MxN block of samples for some values of M and N such that the division of a CTB into coding blocks is a partitioning.

In embodiments, e.g., according to HEVC, a coding tree unit (CTU) may be split into CUs by using a quad-tree structure denoted as coding tree. The decision whether to code a picture area using inter-picture (temporal) or intra-picture (spatial) prediction is made at the CU level. Each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quadtree structure similar to the coding tree for the CU.

In embodiments, e.g., according to the latest video coding standard currently in development, which is referred to as Versatile Video Coding (VVC), Quad-tree and binary tree (QTBT) partitioning is used to partition a coding block. In the QTBT block structure, a CU can have either a square or rectangular shape. For example, a coding tree unit (CTU) is first partitioned by a quadtree structure. The quadtree leaf nodes are further partitioned by a binary tree or ternary (or triple) tree structure. The partitioning tree leaf nodes are called coding units (CUs), and that segmentation is used for prediction and transform processing without any further partitioning. This means that the CU, PU and TU have the same block size in the QTBT coding block structure. In parallel, multiple partition, for example, triple tree partition was also proposed to be used together with the QTBT block structure.

In one example, the mode selection unit 260 of video encoder 20 may be configured to perform any combination of the partitioning techniques described herein.

As described above, the video encoder 20 is configured to determine or select the best or an optimum prediction mode from a set of (pre-determined) prediction modes. The set of prediction modes may comprise, e.g., intra-prediction modes and/or inter-prediction modes.

### Intra-Prediction

The set of intra-prediction modes may comprise 35 different intra-prediction modes, e.g. non-directional modes like DC (or mean) mode and planar mode, or directional modes, e.g. as defined in HEVC, or may comprise 67 different intra-prediction modes, e.g. non-directional modes like DC (or mean) mode and planar mode, or directional modes, e.g. as defined for VVC.

The intra-prediction unit 254 is configured to use reconstructed samples of neighboring blocks of the same current picture to generate an intra-prediction block 265 according to an intra-prediction mode of the set of intra-prediction modes.

The intra prediction unit 254 (or in general the mode selection unit 260) is further configured to output intra-prediction parameters (or in general information indicative of the selected intra prediction mode for the block) to the entropy encoding unit 270 in form of syntax elements 266 for inclusion into the encoded picture data 21, so that, e.g., the video decoder 30 may receive and use the prediction parameters for decoding.

The intra-prediction unit 254 may include palette coding method, which typically includes two parts: a coding method for the palette and a coding method for the samples using the palette. The latter part normally includes a palette index coding and an escape pixel coding. More specific, a palette mode is signaled/derived at the CU level and then for CU coded in the palette mode. For a CU coded in the palette mode, a palette, which enumerates the dominant colors within the CU, is signalled in the bitstream. Signaling in the bitstream here refers to any syntax elements which enable to determine the palette based thereon.

The palette is generally implemented as a color lookup table in which each color entry is associated with an index. Once the palette is constructed, based on frequencies of samples within the CU, the samples can be classified into two categories. A sample belonging to the first category is the same or very close to an entry in the palette. In this case, the sample can be represented by the index of its corresponding entry in the palette. The decoder can reconstruct the sample by looking up the palette entry using the corresponding index. These samples are referred to as indexed samples and the indexes are referred as palette indexes. For samples belonging to the other category, each sample is significantly different from any entry in the palette. These samples are not suitable to be represented by a palette index and are referred to as escape samples. Their color component values are quantized and explicitly coded in the bitstream.

In an exemplified case, typically, from signaling point of view palette coding may include one or more (or all) following syntax elements signaled in the bitstream:
- a CU palette mode flag (palette_mode_flag), which indicates whether palette coding tool is enabled or disabled at CU level; This flag is also referred to as a palette coding control flag herein.
- Palettes (palette) for each or some of colur components, which represents the most frequent signal information in a CU;
- Palettes' prediction vector, which allows to implement prediction mechanism and save a space for palettes transmitting;
- the Signal Escape Flag (signal_escape_flag), which specifies whether there are pixels in current CU which are not included in Palette;
- the Palette Indexes Map (palette_indexes_map) which indicates a certain palette element for each pixel in CU;
- a Scan Order Type, which specifies scan type that is used for moving over CU.

However, since dual tree partitioning was introduced in video compression e.g. in VVC standard, traditional palette coding cannot be applied in a normal way anymore because the luma component and the chroma component may have different partitioning pattern which results different block size, and different dominant sample values. The present invention provides a possible way to using palette coding upon the dual tree scheme in VVC which will be disclosed in detail in later.

### Inter-Prediction

The set of (or possible) inter-prediction modes depends on the available reference pictures (i.e. previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation.

Additional to the above prediction modes, skip mode and/or direct mode may be applied.

The inter prediction unit 244 may include a motion estimation (ME) unit and a motion compensation (MC) unit (both not shown in Fig. 2). The motion estimation unit may be configured to receive or obtain the picture block 203 (current picture block 203 of the current picture 17) and a decoded picture 231, or at least one or a plurality of previously reconstructed blocks, e.g. reconstructed blocks of one or a plurality of other/different previously decoded pictures 231, for motion estimation. E.g. a video sequence may comprise the current picture and the previously decoded pictures 231, or in other words, the current picture and the previously decoded pictures 231 may be part of or form a sequence of pictures forming a video sequence.

The encoder 20 may, e.g., be configured to select a reference block from a plurality of reference blocks of the same or different pictures of the plurality of other pictures and provide a reference picture (or reference picture index) and/or an offset (spatial offset) between the position (x, y coordinates) of the reference block and the position of the current block as inter prediction parameters to the motion estimation unit. This offset is also called motion vector (MV).

The motion compensation unit is configured to obtain, e.g. receive, an inter prediction parameter and to perform inter prediction based on or using the inter prediction parameter to obtain an inter prediction block 265. Motion compensation, performed by the motion compensation unit, may involve fetching or generating the prediction block based on the motion/block vector determined by motion estimation, possibly performing interpolations to sub-pixel precision. Interpolation filtering may generate additional pixel samples from known pixel samples, thus potentially increasing the number of candidate prediction blocks that may be used to code a picture block. Upon receiving the motion vector for the PU of the current picture block, the motion compensation unit may locate the prediction block to which the motion vector points in one of the reference picture lists.

Motion compensation unit may also generate syntax elements associated with the blocks and the video slice for use by video decoder 30 in decoding the picture blocks of the video slice.

### Entropy Coding

The entropy encoding unit 270 is configured to apply, for example, an entropy encoding algorithm or scheme (e.g. a variable length coding (VLC) scheme, an context adaptive VLC scheme (CAVLC), an arithmetic coding scheme, a binarization, a context adaptive binary arithmetic coding (CABAC), syntax-based context-adaptive binary arithmetic coding (SBAC), probability interval partitioning entropy (PIPE) coding or another entropy encoding methodology or technique) or bypass (no compression) on the quantized coefficients 209, inter prediction parameters, intra prediction parameters, loop filter parameters and/or other syntax elements to obtain encoded picture data 21 which can be output via the output 272, e.g. in the form of an encoded bitstream 21, so that, e.g., the video decoder 30 may receive and use the parameters for decoding, . The encoded bitstream 21 may be transmitted to video decoder 30, or stored in a memory for later transmission or retrieval by video decoder 30.

Other structural variations of the video encoder 20 can be used to encode the video stream. For example, a non-transform based encoder 20 can quantize the residual signal directly without the transform processing unit 206 for certain blocks or frames. In another implementation, an encoder 20 can have the quantization unit 208 and the inverse quantization unit 210 combined into a single unit.

### Decoder and Decoding Method

Fig. 3 shows an example of a video decoder 30 that is configured to implement the techniques of this present application. The video decoder 30 is configured to receive encoded picture data 21 (e.g. encoded bitstream 21), e.g. encoded by encoder 20, to obtain a decoded picture 331. The encoded picture data or bitstream comprises information for decoding the encoded picture data, e.g. data that represents picture blocks of an encoded video slice and associated syntax elements.

In the example of Fig. 3, the decoder 30 comprises an entropy decoding unit 304, an inverse quantization unit 310, an inverse transform processing unit 312, a reconstruction unit 314 (e.g. a summer 314), a loop filter 320, a decoded picture buffer (DBP) 330, an inter prediction unit 344 and an intra prediction unit 354. Inter prediction unit 344 may be or include a motion compensation unit. Video decoder 30 may, in some examples, perform a decoding pass generally reciprocal to the encoding pass described with respect to video encoder 100 from FIG. 2.

As explained with regard to the encoder 20, the inverse quantization unit 210, the inverse transform processing unit 212, the reconstruction unit 214 the loop filter 220, the decoded picture buffer (DPB) 230, the inter prediction unit 344 and the intra prediction unit 354 are also referred to as forming the "built-in decoder" of video encoder 20. Accordingly, the inverse quantization unit 310 may be identical in function to the inverse quantization unit 110, the inverse transform processing unit 312 may be identical in function to the inverse transform processing unit 212, the reconstruction unit 314 may be identical in function to reconstruction unit 214, the loop filter 320 may be identical in function to the loop filter 220, and the decoded picture buffer 330 may be identical in function to the decoded picture buffer 230. Therefore, the explanations provided for the respective units and functions of the video 20 encoder apply correspondingly to the respective units and functions of the video decoder 30.

### Entropy Decoding

The entropy decoding unit 304 is configured to parse the bitstream 21 (or in general encoded picture data 21) and perform, for example, entropy decoding to the encoded picture data 21 to obtain, e.g., quantized coefficients 309 and/or decoded coding parameters (not shown in Fig. 3), e.g. any or all of inter prediction parameters (e.g. reference picture index and motion vector), intra prediction parameter (e.g. intra prediction mode or index), transform parameters, quantization parameters, loop filter parameters, and/or other syntax elements. Entropy decoding unit 304 maybe configured to apply the decoding algorithms or schemes corresponding to the encoding schemes as described with regard to the entropy encoding unit 270 of the encoder 20. Entropy decoding unit 304 may be further configured to provide inter prediction parameters, intra prediction parameter and/or other syntax elements to the mode selection unit 360 and other parameters to other units of the decoder 30. Video decoder 30 may receive the syntax elements at the video slice level and/or the video block level.

### Inverse Quantization

The inverse quantization unit 310 may be configured to receive quantization parameters (QP) (or in general information related to the inverse quantization) and quantized coefficients from the encoded picture data 21 (e.g. by parsing and/or decoding, e.g. by entropy decoding unit 304) and to apply based on the quantization parameters an inverse quantization on the decoded quantized coefficients 309 to obtain dequantized coefficients 311, which may also be referred to as transform coefficients 311. The inverse quantization process may include use of a quantization parameter determined by video encoder 20 for each video block in the video slice to determine a degree of quantization and, likewise, a degree of inverse quantization that should be applied.

### Inverse Transform

Inverse transform processing unit 312 may be configured to receive dequantized coefficients 311, also referred to as transform coefficients 311, and to apply a transform to the dequantized coefficients 311 in order to obtain reconstructed residual blocks 213 in the sample domain. The reconstructed residual blocks 213 may also be referred to as transform blocks 313. The transform may be an inverse transform, e.g., an inverse DCT, an inverse DST, an inverse integer transform, or a conceptually similar inverse transform process. The inverse transform processing unit 312 may be further configured to receive transform parameters or corresponding information from the encoded picture data 21 (e.g. by parsing and/or decoding, e.g. by entropy decoding unit 304) to determine the transform to be applied to the dequantized coefficients 311.

### Reconstruction

The reconstruction unit 314 (e.g. adder or summer 314) may be configured to add the reconstructed residual block 313, to the prediction block 365 to obtain a reconstructed block 315 in the sample domain, e.g. by adding the sample values of the reconstructed residual block 313 and the sample values of the prediction block 365.

### Filtering

The loop filter unit 320 (either in the coding loop or after the coding loop) is configured to filter the reconstructed block 315 to obtain a filtered block 321, e.g. to smooth pixel transitions, or otherwise improve the video quality. The loop filter unit 320 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 320 is shown in FIG. 3 as being an in loop filter, in other configurations, the loop filter unit 320 may be implemented as a post loop filter.

### Decoded Picture Buffer

The decoded video blocks 321 of a picture are then stored in decoded picture buffer 330, which stores the decoded pictures 331 as reference pictures for subsequent motion compensation for other pictures and/or for output respectively display.

The decoder 30 is configured to output the decoded picture 311, e.g. via output 312, for presentation or viewing to a user.

### Prediction

The inter prediction unit 344 may be identical to the inter prediction unit 244 (in particular to the motion compensation unit) and the intra prediction unit 354 may be identical to the inter prediction unit 254 in function, and performs split or partitioning decisions and prediction based on the partitioning and/or prediction parameters or respective information received from the encoded picture data 21 (e.g. by parsing and/or decoding, e.g. by entropy decoding unit 304). Mode selection unit 360 may be configured to perform the prediction (intra or inter prediction) per block based on reconstructed pictures, blocks or respective samples (filtered or unfiltered) to obtain the prediction block 365.

When the video slice is coded as an intra coded (I) slice, intra prediction unit 354 of mode selection unit 360 is configured to generate prediction block 365 for a picture block of the current video slice based on a signaled intra prediction mode and data from previously decoded blocks of the current picture. When the video picture is coded as an inter coded (i.e., B, or P) slice, inter prediction unit 344 (e.g. motion compensation unit) of mode selection unit 360 is configured to produce prediction blocks 365 for a video block of the current video slice based on the motion vectors and other syntax elements received from entropy decoding unit 304. For inter prediction, the prediction blocks may be produced from one of the reference pictures within one of the reference picture lists. Video decoder 30 may construct the reference frame lists, List 0 and List 1, using default construction techniques based on reference pictures stored in DPB 330.

Mode selection unit 360 is configured to determine the prediction information for a video block of the current video slice by parsing the motion vectors and other syntax elements, and uses the prediction information to produce the prediction blocks for the current video block being decoded. For example, the mode selection unit 360 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice.

Other variations of the video decoder 30 can be used to decode the encoded picture data 21. For example, the decoder 30 can produce the output video stream without the loop filtering unit 320. For example, a non-transform based decoder 30 can inverse-quantize the residual signal directly without the inverse-transform processing unit 312 for certain blocks or frames. In another implementation, the video decoder 30 can have the inverse-quantization unit 310 and the inverse-transform processing unit 312 combined into a single unit.

It should be understood that, in the encoder 20 and the decoder 30, a processing result of a current step may be further processed and then output to the next step. For example, after interpolation filtering, motion vector derivation or loop filtering, a further operation, such as Clip or shift, may be performed on the processing result of the interpolation filtering, motion vector derivation or loop filtering.

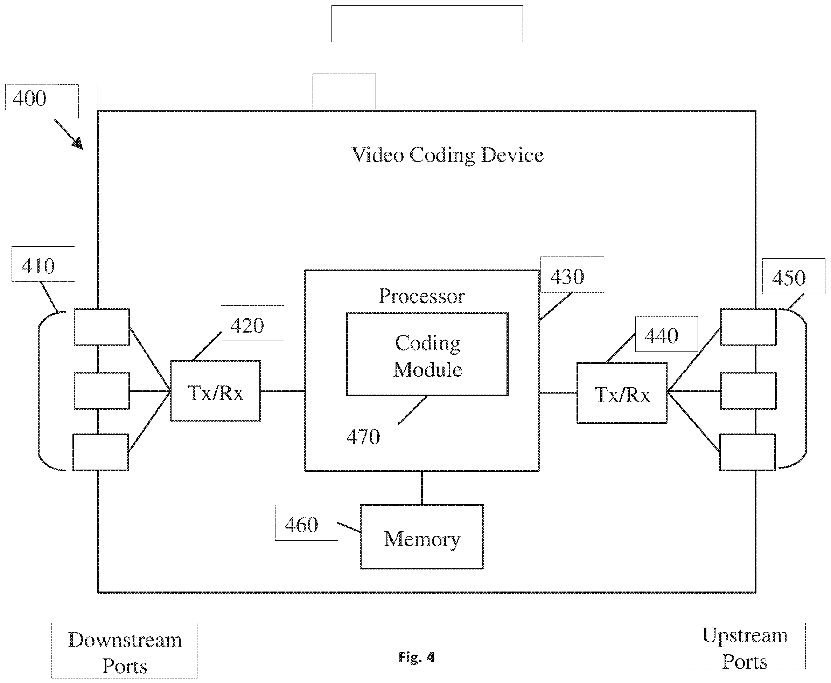

FIG. 4 is a schematic diagram of a video coding device 400 according to an embodiment of the disclosure. The video coding device 400 is suitable for implementing the disclosed embodiments as described herein. In an embodiment, the video coding device 400 may be a decoder such as video decoder 30 of FIG. 1A or an encoder such as video encoder 20 of FIG. 1A.

The video coding device 400 comprises ingress ports 410 (or input ports 410) and receiver units (Rx) 420 for receiving data; a processor, logic unit, or central processing unit (CPU) 430 to process the data; transmitter units (Tx) 440 and egress ports 450 (or output ports 450) for transmitting the data; and a memory 460 for storing the data. The video coding device 400 may also comprise optical-to-electrical (OE) components and electrical-to-optical (EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more CPU chips, cores (e.g., as a multi-core processor), FPGAs, ASICs, and DSPs. The processor 430 is in communication with the ingress ports 410, receiver units 420, transmitter units 440, egress ports 450, and memory 460. The processor 430 comprises a coding module 470. The coding module 470 implements the disclosed embodiments described above. For instance, the coding module 470 implements, processes, prepares, or provides the various coding operations. The inclusion of the coding module 470 therefore provides a substantial improvement to the functionality of the video coding device 400 and effects a transformation of the video coding device 400 to a different state. Alternatively, the coding module 470 is implemented as instructions stored in the memory 460 and executed by the processor 430.

The memory 460 may comprise one or more disks, tape drives, and solid-state drives and may be used as an over-flow data storage device, to store programs when such programs are selected for execution, and to store instructions and data that are read during program execution. The memory 460 may be, for example, volatile and/or non-volatile and may be a read-only memory (ROM), random access memory (RAM), ternary content-addressable memory (TCAM), and/or static random-access memory (SRAM).

Fig. 5 is a simplified block diagram of an apparatus 500 that may be used as either or both of the source device 12 and the destination device 14 from Fig. 1 according to an exemplary embodiment.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, e.g., the processor 502, advantages in speed and efficiency can be achieved using more than one processor.

A memory 504 in the apparatus 500 can be a read only memory (ROM) device or a random access memory (RAM) device in an implementation. Any other suitable type of storage device can be used as the memory 504. The memory 504 can include code and data 506 that is accessed by the processor 502 using a bus 512. The memory 504 can further include an operating system 508 and application programs 510, the application programs 510 including at least one program that permits the processor 502 to perform the methods described here. For example, the application programs 510 can include applications 1 through N, which further include a video coding application that performs the methods described here.

The apparatus 500 can also include one or more output devices, such as a display 518. The display 518 may be, in one example, a touch sensitive display that combines a display with a touch sensitive element that is operable to sense touch inputs. The display 518 can be coupled to the processor 502 via the bus 512.

Although depicted here as a single bus, the bus 512 of the apparatus 500 can be composed of multiple buses. Further, the secondary storage 514 can be directly coupled to the other components of the apparatus 500 or can be accessed via a network and can comprise a single integrated unit such as a memory card or multiple units such as multiple memory cards. The apparatus 500 can thus be implemented in a wide variety of configurations.

### Palette coding in dual tree partition scheme.

As was mentioned before, dual tree partitioning assumes that coding blocks e.g. CUs can be either a single CU, which includes one luma coding block (CB) and two chroma CBs, or separate luma CU and chroma CU, where luma CU includes one luma CB and chroma CU includes two chroma CBs. In coping with that diversity of CBs in dual tree partition scheme, palette coding approach can be used and signaled according to the partitioning type of certain CU.

Generally, a palette coding can be applied either in a separate way, when each palette index points on (is associated with) one of color component, or in coupled way, when each palette index points on (is associated with) more than one color component. First method (separate way) is referred to as separate palette coding and assumes separate calculation and signaling of palette indexes map for each of the color components. Second method (coupled way) is referred to as coupled palette coding and assumes that calculation and signaling of palette indexes map is performed together for some of the color components.

It should be understood that coupled palette coding can include different types of coupling e.g. in case of Y-Cb-Cr coupling one palette index points to Y-Cb-Cr triplet in palette, in case of Cb-Cr coupling, one palette index points to Cb-Cr pair in palette. In other words, Y-Cb-Cr coupling associates one palette index with one respective combination of three color components Y, Cb, Cr. The Cb-Cr coupling associates each palette index with one respective combination of two color components Cb, Cr. There are typically less indices in a palette than amount of possible combinations of the color components. Accordingly, a palette only enables coding of a subset of all colors representable by possible combinations of the color components. In this way, the index to palette may provide for a more efficient coding, as its value range is typically smaller than the value range of the color component combinations. For some CUs, in which the color variation is limited, the coding efficiency is thus increased. However, in addition to the length given by the encoded map of indexes (palette indexes associated with samples of a CU), the length of additional signaling information has to be taken into account. The signaling information may include one or more of the above-mentioned parameters such as the palette, the length of the palette, the escape flag, the palette coding flag or the like. Some parameters may be derived based on other parameters associated with the CU available at the encoder and the decoder, predefined by the standard, or signaled on higher levels (slice header, parameter set common for a single picture or a plurality of pictures or the like).

A certain way of palette coding is normally either preselected for codec or choose depending on some coding parameters like partitioning, slice type, etc.

In the following, the terminology employed herein is briefly summarized:

| Name (Acronym if applicable) | Definition |
|---|---|
| 1. Quad tree (QT) | A tree in which a parent node can be split into four child nodes, each of which may become parent node for another split into four child nodes. QT design is used in ITU-T H.265/HEVC standard. |
| 2. Quad tree binary tree (QTBT) | A partition design was introduced in which allows to achieve significant benefit on top of current state-of-the-art with QT partitioning. |
| 3. Coding Tree Unit / Coding Unit (CTU/CU) | Basic unit in ITU-T H.265/HEVC and further codecs. CTU is recursively divided by CU. |
| 4. Single tree | A coding approach where Luma and Chroma components share one partitioning tree. For this case, a CU contains one Luma Coding block (CB) and two chroma coding blocks, one for Cb and one for Cr. |
| 5. Dual Tree/Separate tree | A coding approach where Luma and Chroma components have one partitioning tree each. |
| | For this case, a Luma CU contains one Luma Coding block (CB) and a Chroma CU contains two chroma coding blocks, one for Cb and one for Cr |
| 6. Single CU | A coding block of luma samples, two corresponding coding blocks of chroma samples of a picture that has three sample arrays. |
| 7. Luma CU | A CU corresponding to Luma coding tree, when Separate tree is used. Luma CU includes Y component information. |
| 8. Chroma CU | A CU corresponding to Chroma coding tree, when Separate tree is used. Chroma CU includes Cb and Cr components information. |
| 9. Palette | A set of indexed pixels' value which are used in current CU block for certain Color Component. In general, YCbCr color format assumes presence of Y-Palette, Cb-Palette and Cr-palette. When one set is used for more than Color Components, such palette is called Joint Palette. E.g. Joint YCbCr Palette assumes that one set is used for all Y, Cb and Cr component. Joint CbCr palette assumes that one set is used for Y component and one set for joint Cb and Cr. |
| 10. Separated Palette | An approach where 3 indexes sets are used for access Y, Cb and Cr Palettes. |
| 11. Coupled Palette | An approach where less than 3 indexes sets are used for access Y, Cb and Cr Palettes |
| 12. Palette Element | An element of certain palette. When coupled approach is used the element is a triple or pair |

A separate or Dual Coding Tree approach was recently introduced into modern video codec standards and allows a beneficial effect to be achieved relative to a normal Single Tree approach. The Separate Tree approach assumes that a recursive coding block's structure will be applied for Luma and for Chroma components separately. Using this approach, each CTU is recursively further split into two separated coding trees, which may be quad, binary, ternary, or any other type of split. One tree is for a Luma component, including Y information of signal, and one tree is for a Chroma component, including Cb and Cr information from signal.

A palette coding tool may be implemented in a few different ways, and normally includes the following main components: the CU palette mode flag (palette_mode_flag), which indicates whether palette tool is enabled or disabled at CU level; the Palettes (palette) for each or some of the components, which represents the most frequent signal information in CU; the Palettes' prediction vector, which indicates that a prediction mechanism should be implemented and space should be saved for transmitting palettes; the Signal Escape Flag (signal_escape_flag), which specifies whether there are pixels in the current CU that are out of the Palette; the Palette Indexes Map (palette_indexes_map), which indicates a certain palette element for each pixel in the CU; the Scan Order Type, which specifies scan type is used for moving over the CU. An implementation of the abovementioned Palette Tool components when the Separate or Dual Coding Tree approach is possible are disclosed below.

### The first embodiment

First embodiment describes relationship of palette_mode_flag for a CU in a luma separate tree and a CU in a chroma separate tree when dual tree partitioning is allowed.

In a first possible way, a palette_mode_flag is signaled for each CU independently. In this method, when separate tree is used, one palette_mode_flag is signaled for luma CU and one palette_mode_flag is signaled for chroma CU independently. In the case of single tree, palette_mode_flag is signaled for one CU which contains all color components (one luma CB and two chroma CBs).

In a second possible way, a palette_mode_flag is always signaled independently for luma component and chroma components, regardless whether single tree or separate tree is used. In this method, when separate tree is used, one palette_mode_flag is signaled for luma and one palette_mode_flag is signaled for chroma CU respectively. In the case of single tree, within one CU, one palette_mode_flag is signaled for one luma coding block and another palette_mode_flag is signaled for the chroma coding blocks within the same CU.

In a third possible way, a palette_mode_flag is signaled for Luma CU only. In this method palette_mode_flag for chroma CU is inferred to be false and palette mode for chroma is not used.

In a fourth possible way, a palette_mode_flag for a chroma CU depends on corresponding luma CUs and interaction (relation) of them with the current chroma CU. Let Luma coverage is a set of luma CUs, of which union spatially covers whole chroma block. If there are more than one coverage for the current chroma block, one with minimal number of elements is considered.
1. If chroma CU is completely covered by one luma CU, then the palette_mode_flag for chroma CU is inherited from luma CU. For example, the palette_mode_flag_CbCr (chroma) is set to the same value as the palette_mode_flag_Y (luma) value for the same CU location.
2. If chroma CU is covered by more than one luma CUs, and if all such luma CUs have same palette_mode_flag, then the palette mode for chroma CU is inherited from the luma CUs.
3. If chroma CU is covered by more than one luma CUs, and if not all such luma CUs have the same palette_mode_flag, then either:
   a. palette_mode_flag for chroma CU is signaled in the bitstream; or
   b. palette_mode_flag for chroma CU is inherited from luma CUs based on majoritarian principle among palette_modes_flags for luma CUs; In other words, the palette_mode_flag_CbCr is set to the most frequently occurring flag among the flags of the luma CUs covering the chroma CU; or
   c. palette_mode_flag for chroma CU is inherited from luma CUs based on ratio of palette modes flags of same value (true/false); if ratio is above than (exceeds) some predefined threshold, then palette_mode_flag for chroma CU is inherited from by majoritarian value of palette_mode_flags in the luma CUs; otherwise palette_mode_flag for chroma CU is signaled; In other words, option b) is applied if the ratio between the number of CUs with the most frequently occurring flag value and the opposite flag value exceeds the predefined threshold, otherwise the chroma palette_mode_flag is signaled; here it is assumed that the flag may take one of two different values; however, the present disclosure is not limited thereto - in general, the palette mode flag may be capable of signaling more than two values corresponding to respective more than two palette modes; or
   d. palette_mode_flag for chroma CU is inherited from luma CUs based on weighted function of palette modes for luma CUs, where weights for each luma CU palette mode are determined by spatial correspondence between current chroma CU and luma CUs.

(It is noted that out of the above possibilities a-d, one may be predefined by standard. Alternatively, one of the possibilities a-b may be set by the encoder and signaled once for one or a plurality of pictures or for a part of a picture. As long as encoder and decoder are capable of employing the same inheriting rule (one of a-d), the present disclosure is not limited by any particular approach.)
4. palette_mode_flag for chroma CU is inherited from one certain luma CU, which covers the chroma CU, e.g. the luma CU, which covers top left or central sample of the chroma CU.
5. palette_mode_flag for chroma CU is derived based on one certain luma CU, which covers the chroma CU, e.g. the luma CU, which covers top left or central sample of the chroma CU, e.g. in one of following ways:
   a. if covering luma CU has palette_mode_flag that equals to 0 (meaning that palette coding is not applied for the luma CU), then palette_mode_flag for the chroma CU is inferred to be 0.
   b. if covering luma CU has palette_mode_flag that equals to 0, then palette_mode_flag for the chroma CU is signaled in the bistream/for the decoding side, the palette_mode_flag for the chroma CU is parsed from the bitstream.
   c. if covering luma CU has palette_mode_flag that equals to 1, then palette_mode_flag for the chroma CU is inferred to be 1
   d. if covering luma CU has palette_mode_flag that equals to 1, then palette_mode_flag for the chroma CU is signaled in the bistream/for the decoding side, the palette_mode_flag for the chroma CU is parsed from the bitstream.

It is noted that in the above examples, the two chroma components are handled jointly. However, in some exemplary implementations, the choma components may also be handled separately, i.e. have separate palette mode flags, palettes, and other related parameters as mentioned above for luma and the chromas. Moreover, herein, for simplicity reasons the term palette_mode_flag or flag is sometimes employed with the meaning of flag value.

In fifth method, palette_mode_flag for Chroma CU is signaled using CABAC, where the contexts for the current chroma block are chosen based on corresponding luma blocks, e.g. if all corresponding luma blocks have same palette_mode_flag, then use one context, otherwise use another context.

### The second embodiment

This embodiment discloses methods of palettes and palettes' sizes transmitting and deriving when dual tree is possible, it should be noted that this embodiment can be combined with the first embodiment in any possible way.

In a first possible way, separate palettes are always used regardless whether single tree or separate tree is used. In this method, the palettes' sizes and the palettes for each Y, Cb, and Cr components are transmitted as independent syntax elements. If single tree is used, palettes' sizes and the palettes are transmitted in single CU, for each Y, Cb, and Cr component. If dual tree is used, palette' sizes and the palette for Y component are transmitted in luma CU, and palettes' sizes and the palettes for Cb and Cr components are transmitted in Chroma CU. As an alternative of the first possible way, if Single Tree is used, Palettes' sizes and the Palettes, respectively for each Y, Cb, and Cr component, are transmitted in single CU. If Dual Tree is used, Palettes' sizes and the Palettes for Y component are transmitted in Luma CU, and Palettes' sizes and the Palettes, respectively for Cb and Cr components are transmitted in Chroma CU.

In a second possible way, palettes' sizes for one component may be derived based on palettes' size of another component based on some predefined condition, e.g. palettes' sizes for chroma may be 2 times less than transmitted palettes' sizes for luma. This method may be used for both separate and coupled palette approach. In this method, if single tree is used, palettes' size for Y component is transmitted in single CU and palettes' sizes for Cb and Cr components are derived based on predefined condition; if dual tree is used, palette's size for Y component is transmitted in luma CU and palettes' sizes for Cb and Cr components are derived based on predefined condition.

In a third possible way, a special flag may be signaled in the bitstream to specify whether palettes' sizes for one component are signaled or derived based on palettes' size of another component. The above-mentioned palette size signaling (coding) approaches are exemplary. The present disclosure is not limited thereto. For example, the size of the palette may be also fixed in a standard or derivable, for instance based on the CU size or other parameters, according to some rule defined in the standard without further signaling between the encoder and the decoder.

In a forth possible way, each palette to be transmitted for Y, Cb and Cr component may be ordered in some predefined monotonical order and the differences between neighboring elements may be transmitted. If single tree is used the differences are transmitted in single CU. If dual tree is used the differences for Y component are transmitted in luma CU, and the differences for Cb and Cr components are transmitted in chroma CU. In this method, without limitation of generality assuming palettes are ordered in monotonically increasing order, for each component each palette element starting from second may be represented as difference between current and previous palette element. The first element may be represented and coded using full representation without any additional processing.

In a fifth possible way, each palette to be transmitted for Y, Cb and Cr component may be ordered in some predefined monotonically order and the differences between neighboring elements may be transmitted. If single tree is used the differences are transmitted in single CU. If dual tree is used, the differences for Y component are transmitted in luma CU, and the differences for Cb and Cr components are transmitted in chroma CU. In this method, without limitation of generality assuming palettes are ordered in increasing order, for each component each palette element from the second to the second-to-last may be represented as difference between current and previous palette element. The first element may be represented and coded using full representation without any additional processing. The last element may be represented and coded as a difference between maximal possible values and itself.

In a sixth method, Joint CbCr Palettes are always used regardless whether single tree or separate tree is used. In this method, the Palettes' sizes and the Palettes are transmitted for each separate groups. If Single Tree is used, Palettes' sizes and the Palettes are transmitted in single CU for Y component and for joint Cb-Cr components, respectively; If Dual Tree is used, Palettes' sizes and the Palettes for Y component are transmitted in a Luma CU, and joint CbCr Palettes' sizes and the Palettes are transmitted in a chroma CU.

In a seventh method, Joint CbCr Palettes are applied when separate tree is used and Joint YCbCr palettes are applied when single tree is used. If Single Tree is used, Joint YCbCr Palettes' sizes and the Palettes are transmitted for a CU with all Y Cb and Cr components together. If Dual Tree is used, Palettes' sizes and the Palettes for Y component are transmitted in a Luma CU, and joint CbCr Palettes' sizes and the Palettes are transmitted in a chroma CU.

In two above mentioned methods, if coupled palette is used, then coupled elements may be ordered as tuples by certain elements of the tuple. E.g. if Y-Cb-Cr coupling is used, the ordering of Y-Cb-Cr-triplets, which are palette elements, may be performed by first Y-value, and Cb- and Cr- values will be reordered according to Y-values. In a more specific example, if a coupled Y-Cb-Cr palette consists of following triplets: (100, 100, 100), (90, 150, 150), (120, 200, 90), after ordering by first (Y component) it will be: (90, 150, 150), (100, 100, 100), (120, 200, 90).

In this method, Y-Palette may be represented as differences between neighboring elements palette element, as described above, and Cb- and Cr- Palettes may be represented in full way without additional processing. In specific example given above such representation will be: (100, 100, 100), (10,100,100), (10,200,90).

In another example, if Cb-Cr Coupled Palette in used, Y-Palette and one of Cb- or Cr-Palette may be represented and transmitted as differences between neighboring elements, the rest Palette part (e.g. the remaining palette) may be represented and transmitted in full way without additional processing.

### The third embodiment

This embodiment describes different methods of palettes' prediction when dual tree is possible.

In first possible way, if separate palettes are used, separate *palettes' prediction vectors,* which comprise only of 0 and 1 values (also referred to as boolean vectors), one for each Y, Cb, and Cr components are transmitted as independent syntax elements. In this method if single tree is used, the palettes' prediction vectors for each Y, Cb, and Cr components are transmitted in a single CU; if dual tree is used, palettes' prediction boolean vector for Y component is transmitted in luma CU, and palettes' prediction boolean vectors for Cb and Cr components are transmitted in chroma CU.

In a second possible way, if coupled palettes are used, the palettes' prediction boolean vectors are transmitted for each separate groups. E.g. in case of coupled Cb-Cr, if single tree is used, palettes' prediction boolean vectors for Y component and for coupled Cb-Cr components are transmitted in single CU; if dual tree is used, palettes' prediction boolean vector for Y component is transmitted in luma CU, and palettes' prediction boolean vector for coupled Cb-Cr components is transmitted in chroma CU.

In a third method, when Coupled Palettes are used, the Palettes' Prediction Boolean vectors are transmitted for each separate groups. For example, in case of Coupled Cb-Cr, when Single Tree is used, Palettes' Prediction Boolean vectors for Y component and for Coupled Cb-Cr components are transmitted in single CU; when Dual tree is used, Palettes' Prediction Boolean vector for Y component is transmitted in Luma CU, and Palettes' Prediction Boolean vector for Coupled Cb-Cr components is transmitted in Chroma CU.

It should be noted the third embodiments can be combined with the first embodiment and the second embodiment alone or in combination.

### The forth embodiment

This embodiment describes different methods of signal_escape_flag usage when dual tree is possible.

In a first possible way, the signal_escape_flag for each Y, Cb, and Cr components are transmitted as independent syntax elements. If single tree is used, signal_escape_flag for Y, Cb and Cr components are transmitted independently in single CU, if dual tree is used signal_escape_flag for Y component is transmitted in luma CU and signal_escape_flags for Cb and Cr components are independently transmitted in chroma CU.

In a second possible way, only one signal_escape_flag for all components are transmitted in a CU. If single tree is used, one signal_escape_flag for Y, Cb and Cr components are transmitted in a CU. If dual tree is used, one signal_escape_flag for Y component is transmitted in luma CU and one signal_escape_flag for Cb and Cr components is transmitted in chroma CU.

In a third possible way, one signal_escape_flag is always signaled for Y components and one signal_escape_flags for Cb and Cr components, regardless whether single tree or separate tree is used. If single tree is used, one signal_escape_flag for Y component and one signal_escape_flag for joint Cb and Cr components are transmitted in a CU. If dual tree is used, one signal_escape_flag for Y component is transmitted in luma CU and one signal_escape_flag for Cb and Cr components is transmitted in chroma CU.

In a fourth possible way signal_escape_flag may be signaled for luma CU only and always inferred to be false for chroma CU.

In a fifth possible way signal_escape_flag may be signaled for luma CU only and derived for chroma CU in one or more of following ways:
1. If chroma CU is completely covered by one luma CU, then the signal_escape_flag for chroma CU is inherited from luma CU.
2. If chroma CU is minimally covered by more than one luma CUs, and if all such luma CUs have same signal_escape_flag, then the palette mode for chroma CU is inherited from luma CUs.
3. If chroma CU is covered by more than one luma CUs, and if not all such luma CUs have same signal_escape_flag, then either
   a. signal_escape_flag for chroma CU is signaled in the bitstream; or
   b. signal_escape_flag for chroma CU is inherited from luma CUs based on majoritarian principle among signal_escape_flag for luma CUs; or
   c. signal_escape_flag for chroma CU is inherited from luma CUs based on ratio of palette modes flags of same value (true/false); if ratio is above than (exceeds) some predefined threshold then signal_escape_flag for chroma CU is inherited from by majoritarian value of signal_escape_flag in the luma CUs; otherwise signal_escape_flag for chroma CU is signaled; or
   d. signal_escape_flag for chroma CU is inherited from luma CUs based on weighted function of palette modes for luma CUs, where weights for each luma CU palette mode are determined by spatial correspondence between current chroma CU and luma CUs.
4. signal_escape_flag for chroma CU is inherited from one certain luma CU, which covers the chroma CU, e.g. the luma CU, which covers top left or central sample of the chroma CU.
5. signal_escape_flag for chroma CU is derived based on one certain luma CU, which covers the chroma CU, e.g. the luma CU, which covers top left or central sample of the chroma CU, e.g. in one of following ways:
   a. if covering luma CU has signal_escape_flag equal to 0, then signal_escape_flag for the chroma CU is inferred to be 0.
   b. if covering luma CU has signal_escape_flag equal to 0, then signal_escape_flag for the chroma CU is signaled in the bitstream.
   c. if covering luma CU has signal_escape_flag equal to 1, then signal_escape_flag for the chroma CU is inferred to be 1.
   d. if covering luma CU has signal_escape_flag equal to 1, then signal_escape_flag for the chroma CU is signaled in the bitstream.

### The fifth embodiment

This embodiment describes different methods of palette indexes map usage and signaling when dual tree is possible.

In a first possible way, if separate palettes are used, the palette_indexes_map for each Y, Cb, and Cr components are transmitted as independent syntax elements. If single tree is used, palette_indexes_map, respectively for each Y, Cb, and Cr components are transmitted in single CU, if dual tree is used palette_indexes_map for Y component is transmitted in luma CU and palette_indexes_map, respectively for Cb and Cr components are transmitted in chroma CU.

In a second possible way, if coupled palettes are used, the palette_indexes_map is transmitted for each separate group. E.g. in case of coupled Cb-Cr, if single tree is used, the palette_indexes_map for each Y and Cb-Cr groups are transmitted as independent syntax elements in single CU, if dual tree is used, the palette_indexes_map for Y component is transmitted in luma CU and coupled palette_indexes_map for Cb-Cr components is transmitted in chroma CU.

In another example in case of Y-Cb-Cr coupling, if single tree is used, the palette_indexes_map for Y-Cb-Cr group is transmitted as independent syntax elements in single CU, if dual tree is used, the palette_indexes_map for Y component is transmitted in luma CU and coupled palette_indexes_map for Cb-Cr components is transmitted in chroma CU.

It should be understood, that above-mentioned methods may be applied regardless of any type of Index Map representation and coding. E.g. palette_indexes_map may be represented and coded using run-length coding (RLE) coding, which may in its turn include all or some of following syntax elements: num_indexes array, last_run_type value, s_points array, runs array and some others. In another example palette_indexes_map may be represented and coded directly using certain scan type to move over 2-dimensional rectangular indexes matrix.

In third possible way, palette_indexes_map for luma and chroma CUs may have different from each other's representations and codings. E.g. palette_indexes_map for luma CU may be represented and coded using RLE coding, which may in its turn include all or some of following syntax elements: num_indexes array, last_run_type value, s_points array, runs array and some others; and palette_indexes_map for chroma CU may be represented and coded directly using certain scan type to move over 2-dimensional rectangular indexes matrix. In another examples any other combinations of representations and coding for luma and chroma CUs may be used.

In fourth possible way, palette_indexes_map for Y, Cb and Cr components may have different from each other's representations and codings. E.g. palette_indexes_map for Y component may be represented and coded using RLE coding, which may in its turn include all or some of following syntax elements: num_indexes array, last_run_type value, s_points array, runs array and some others; and palette_indexes_map for Cb and Cr components may be represented and coded directly using certain scan type to move over 2-dimensional rectangular indexes matrix. In another examples any other combinations of representations and coding for different components may be used.

### The sixth embodiment

This embodiment describes different approaches of palette_scan_order usage when dual tree if possible.

In first possible way, the palette_scan_order for each Y, Cb, and Cr components are transmitted as independent syntax elements. If single tree is used, palette_scan_order for Y, Cb and Cr components are transmitted in single CU as 3 syntax elemets, if dual tree is used palette_scan_order for Y component is transmitted in Luma CU and palette_scan_order for Cb and Cr components are transmitted in Chroma CU as 2 syntax elements.

In second possible way, if dual tree is used palette_scan_order may be transmitted once for each luma CU and chroma CU as independent syntax elements.

In third possible way, if dual tree is used palette_scan_order may be signaled for luma CU only and inferred to some predefined value for chroma CU.

Alternatively, palette_scan_order may be signaled for Y plane only and inferred to some predefined value for Cb and Cr planes.

In fourth possible way palette_scan_order may be signaled for luma CU only and derived for chroma CU in one or more of following ways.
1. If chroma CU is completely covered by one luma CU, then the palette_scan_order for chroma CU is inherited from luma CU.
2. If chroma CU is minimally covered by more than one luma CUs, and if all such luma CUs have same palette_scan_order, then the palette mode for chroma CU is inherited from luma CUs.
3. If chroma CU is minimally covered by more than one luma CUs, and if not all such luma CUs have same palette_scan_order, then either
   a. palette_scan_order for chroma CU is signaled in the bitstream; or
   b. palette_scan_order for chroma CU is inherited from luma CUs based on majoritarian principle among palette_scan_order for luma CUs; or
   c. palette_scan_order for chroma CU is inherited from luma CUs based on ratio of palette modes flags of same value (true/false); if ratio is above than some predefined threshold then palette_scan_order for chroma CU is inherited from by majoritarian value of palette_scan_order in the luma CUs; otherwise palette_scan_order for chroma CU is signaled; or
   d. palette_scan_order for chroma CU is inherited from luma CUs based on weighted function of palette modes for luma CUs, where weights for each luma CU palette mode are determined by spatial correspondence between current chroma CU and luma CUs.
4. palette_scan_order for chroma CU is inherited from one certain luma CU, which covers the chroma CU, e.g. the luma CU, which covers top left or central sample of the chroma CU.

By embodiments disclosed above, the following improved performance can be observed by experiments.

**Table 1 - Palette coding simulation results in WC3.0. Y-Cb-Cr coupled Palettes are used for Single Tree**

| | **All Intra Main10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | 0.01% | 0.04% | 0.08% | 108% | 99% |
| Class A2 | 0.09% | 0.13% | 0.08% | 106% | 100% |
| Class B | 0.09% | 0.09% | 0.07% | 106% | 100% |
| Class C | 0.10% | 0.09% | -0.08% | 108% | 106% |
| Class E | 0.13% | 0.16% | 0.20% | 107% | 101% |
| **Overall** | 0.09% | 0.10% | 0.06% | 107% | 101 % |
| Class D | 0.10% | 0.07% | 0.02% | 107% | 104% |
| Class F (optional) | -11.43% | -8.94% | -9.04% | 117% | 89% |
| TGM | -33.06% | -27.59% | -27.70% | 131% | 68% |

| | **Random Access Main 10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | 0.12% | 0.16% | 0.12% | 104% | 100% |
| Class A2 | 0.11 % | 0.23% | 0.22% | 105% | 100% |
| Class B | 0.13% | 0.28% | -0.11% | 106% | 100% |
| Class C | 0.17% | 0.10% | 0.21% | 108% | 107% |
| Class E | | | | | |
| **Overall** | 0.14% | 0.20% | 0.09% | 106% | 102% |
| Class D | 0.20% | -0.16% | 0.25% | 109% | 104% |
| Class F (optional) | -8.52% | -8.02% | -8.31 % | 110% | 101 % |
| TGM | -15.71 % | -14.68% | -14.53% | 106% | 93% |

| | **Low delay B Main10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | | | | | |
| Class A2 | | | | | |
| Class B | 0.09% | -0.01 % | 0.06% | 106% | 98% |
| Class C | 0.15% | 0.44% | 0.49% | 106% | 95% |
| Class E | 0.26% | 1.25% | 0.46% | 107% | 96% |
| **Overall** | 0.15% | 0.45% | 0.30% | 106% | 96% |
| Class D | 0.27% | 0.54% | 0.40% | 109% | 102% |
| Class F (optional) | -3.91 % | -4.49% | -4.87% | 109% | 100% |
| TGM | -7.04% | -6.69% | -6.36% | 106% | 95% |

**Table 2 - Palette coding simulation results in VVC3.0. Y Palette and Cb-Cr coupled Palettes are used for Single Tree**

| | **All Intra Main10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | 0.01 % | 0.04% | 0.08% | 112% | 103% |
| Class A2 | 0.09% | 0.13% | 0.08% | 112% | 106% |
| Class B | 0.09% | 0.09% | 0.07% | 110% | 104% |
| Class C | 0.10% | 0.09% | -0.08% | 111% | 109% |
| Class E | 0.13% | 0.16% | 0.20% | 111% | 104% |
| **Overall** | 0.09% | 0.10% | 0.06% | 111% | 105% |
| Class D | 0.10% | 0.07% | 0.02% | 110% | 108% |
| Class F (optional) | -11.43% | -8.94% | -9.04% | 121% | 94% |
| TGM | -33.06% | -27.59% | -27.70% | 135% | 69% |

| | **Random Access Main 10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | 0.08% | 0.10% | 0.12% | 102% | 100% |
| Class A2 | 0.08% | 0.20% | 0.20% | 104% | 100% |
| Class B | 0.11% | 0.24% | 0.03% | 105% | 99% |
| Class C | 0.14% | 0.15% | 0.18% | 108% | 107% |
| Class E | | | | | |
| **Overall** | 0.11% | 0.18% | 0.12% | 105% | 101% |
| Class D | 0.21 % | -0.11 % | 0.25% | 108% | 104% |
| Class F (optional) | -8.65% | -7.95% | -8.32% | 110% | 102% |
| TGM | -16.64% | -15.24% | -15.02% | 108% | 94% |

| | **Low delay B Main10** | | | | |
|---|---|---|---|---|---|
| | **Over [vcgit.hhi.fraunhofer.de][jvet][VVCSoftware_BMS.git][599ab8f][VTM]** | | | | |
| | Y | U | V | EncT | DecT |
| Class A1 | | | | | |
| Class A2 | | | | | |
| Class B | 0.08% | -0.02% | -0.08% | 110% | 103% |
| Class C | 0.15% | 0.39% | 0.26% | 109% | 99% |
| Class E | 0.21 % | 1.30% | 0.26% | 109% | 102% |
| **Overall** | 0.13% | 0.45% | 0.12% | 109% | 101 % |
| Class D | 0.23% | 0.66% | 0.26% | 111% | 106% |
| Class F (optional) | -5.07% | -4.98% | -5.52% | 110% | 99% |
| TGM | -8.81% | -8.43% | -7.74% | 106% | 94% |

Table 1 demonstrates Palette Coding performance in VVC 3.0 with Dual Tree partitioning, where for single tree coupled Y-Cb-Cr Palette indexes Map is signaled; for dual tree Luma CU Y Palette indexes Map is signaled and for dual tree chroma CU coupled Cb-Cr Palette indexes Map is signaled.

Table 2 demonstrates Palette Coding performance in VVC 3.0 with Dual Tree partitioning, where for single tree coupled Y Palette indexes Map and coupled Cb-Cr Palette indexes Map are signaled; for dual tree Luma CU Y Palette indexes Map is signaled and for dual tree chroma CU coupled Cb-Cr Palette indexes Map is signaled.

Thus it can be shown that using coupled palettes instead of separated allows to achieve beneficial effect.

Although embodiments of the invention have been primarily described based on video coding, it should be noted that embodiments of the coding system 10, encoder 20 and decoder 30 (and correspondingly the system 10) and the other embodiments described herein may also be configured for still picture processing or coding, i.e. the processing or coding of an individual picture independent of any preceding or consecutive picture as in video coding. In general only inter-prediction units 244 (encoder) and 344 (decoder) may not be available in case the picture processing coding is limited to a single picture 17. All other functionalities (also referred to as tools or technologies) of the video encoder 20 and video decoder 30 may equally be used for still picture processing, e.g. residual calculation 204/304, transform 206, quantization 208, inverse quantization 210/310, (inverse) transform 212/312, partitioning 262/362, intra-prediction 254/354, and/or loop filtering 220, 320, and entropy coding 270 and entropy decoding 304.

Embodiments, e.g. of the encoder 20 and the decoder 30, and functions described herein, e.g. with reference to the encoder 20 and the decoder 30, may be implemented in hardware, software, firmware, or any combination thereof. If implemented in software, the functions may be stored on a computer-readable medium or transmitted over communication media as one or more instructions or code and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

Summarizing briefly the present disclosure, in a first example, a method of coding implemented by a encoding device is provided, comprising: partitioning an current coding tree unit into either single CU including one luma CB and two chroma CB in signal partition type, or separate luma CU including luma CB only and Chroma CU including two chroma CBs only in separate partition type; encoding a subject CU and the associated palette coding information into a bitstram depending on the partition type of the subject CU; and/or decoding a subject CU based on the partitioning type of the subject CU and the associated palette coding information from a/the bitstream. The method of claim 1, wherein the associated palette coding information comprise; a palette coding control flag and palette coding info syntax elements and the palette coding control flag and palette coding info syntax elements are calculated and signaled/parsed based on the partitioning type of the subject CU.

Further to the first example, palette coding info syntax elements may include one or more (or all) of: palette(s) predictor vector, palette(s)' sizes, palette(s), escape flag(s), indexes map(s).

Alternatively or in addition, palette coding control flag and palette coding info syntax elements may be calculated and signaled for single CU type once for Y-Cb-Cr components together (coupled).

Alternatively or in addition, palette coding control flag and palette coding info syntax elements are calculated and signaled for single CU type twice: one for Y component and one for Cb-Cr components together (coupled).

Alternatively or in addition, palette coding control flag and palette coding info syntax elements are calculated and signaled for luma CU once for Y component.

Alternatively or in addition, palette coding is not used in chroma CU in case of dual tree used.

Alternatively or in addition, palette coding control flag and palette coding info syntax elements are calculated and signaled once for Cb-Cr components together (coupled) in chroma CU in case of dual tree used.

Alternatively or in addition, palette coding control flag and palette coding info syntax elements calculation and signaling for chroma CU in case of dual tree used, depend on palette coding control flag of collocated luma CU(s).

For example, palette coding control flag for chroma CU in case of dual tree used is calculated based on palette coding control flag of collocated luma CU(s) according to following rule: if all collocated luma block has palette coding control flag equals to 1, then calculate and signal palette coding control flag and palette coding info syntax elements for the current chroma block. Otherwise, do not use palette coding for the current chroma block.

In another example, palette coding control flag for chroma CU in case of dual tree used is calculated based on palette coding control flag of collocated luma CU(s) according to following rule: if all collocated luma block has palette coding control flag equals to 1, then infer palette coding control flag for the chroma block to be equal 1, and calculate and signal palette coding info syntax elements. Otherwise, calculate and signal palette coding control flag and palette coding info syntax elements for the current chroma block.

According to en exemplary embodiment, a method of decoding implemented by a decoding device is provided, comprising parsing a partition type of a current coding unit (CU) from a bitstream, wherein the partition type is either a single tree partition type or a separate tree partition type, and as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type; parsing from the bitstream an palette enabling indicator indicating if a palette coding is allowed for the single CU when the partition type of the current CU is single tree partition type; or parsing from the bitstream an palette enabling indicator indicating if a palette coding is allowed for the luma CU when the partition type of the current CU is the separate tree partition type; and decoding the current CU by using a palette decoding method if the palette enabling indicator indicates a palette coding is allowed.

In some exemplary implementations, in the method inferring a palette coding is not allowed for the chroma CU, and the method includes decoding the chroma CU by using a decoding method other than the palette decoding method.

The method may further comprise deriving an palette enabling indicator indicating if a palette coding is allowed for the chroma CU on the basis of the palette enabling indicator of the luma CU associated with the chroma CU.

In the method the deriving an palette enabling indicator if a palette coding is allowed for the chroma CU on the basis of the palette enabling indicator of the luma CU associated with the chroma CU may comprise: when the chroma CU is completely covered by the luma CU, the palette enabling indicator for chroma CU is the same as the palette enabling indicator for the luma CU; or when the chroma CU is minimally covered by more than one luma CUs including the luma CU, and when all of the luma CUs have same indicators (same value), the palette enabling indicator for the chroma CU is the same as the indictor for the luma CUs; or when the chroma CU is minimally covered by more than one luma CUs including the luma CU, but if not all luma CUs have same indicators, parsing the palette enabling indicator for the chroma CU from the bitstream, or setting the indictor for the chroma CU as the indictors majorly used for the luma CUs, or setting the indictor of a luma CU out of the luma CUs as the indictor for the chroma CU based on a predefined condition, or setting the indictor of a luma CU out of the luma CUs as the indictor for the chroma CU based on a weighted function of indicators for luma CUs, where weights for indictors of each luma CUs are determined by spatial correspondence between the chroma CU and the luma CUs; or setting the indictor of the luma CU as the indictor for the chroma CU when the luma CU covers the top left or central sample of the chroma CU; or deriving the indictor of the luma CU as the indictor for the chroma CU when the luma CU covers the top left or central sample of the chroma CU by any of the following way: a) when the palette enabling indicator of the luma CU equals to 0, then the indictor for the chroma CU is set to be 0; b) when the indictor of the luma CU equals to 0, parsing the indictor for the chroma CU from the bit stream; c) when the palette enabling indicator of the luma CU equals to 1, the indictor for the chroma CU is set to be 1, d) when the palette enabling indicator of the luma CU equals to 1, parsing the indictor for the chroma CU from the bit stream.

For instance, when the chroma CU is minimally covered by more than one luma CUs including the luma CU, but if not all luma CUs have same indicators, setting the indictor of a luma CU out of the luma CUs as the indictor for the chroma CU based on a predefined condition comprise: setting the indictor of a luma CU out of the luma CUs as the indictor for the chroma CU based on a ratio of indicators of same value (true/false), when the ratio is above than a predefined threshold, the indictor for chroma CU is set as the palette enabling indicator majorly used by the luma CUs, otherwise, parsing the indictor for the chroma CU from the bit stream.

In some embodiments, decoding the current CU by using a palette decoding method comprises: deriving a palette coding information for the single CU, luma CU or chroma CU the from bitsream; and decoding the current CU by using a palette decoding method by using the coding information.

For example, the palette coding information for the single CU comprises: palettes for each of the luma CB and chroma CBs, and/or palettes sizes, and/or palettes index maps, and/or palettes scan orders for each of the luma CB and Chroma CBs; or the palette coding information for the single CU comprises: a palette, and/or palettes sizes, and/or palettes index maps, and/or palettes scan orders for the luma CB, a palette and/or palettes sizes, and/or palettes index maps, and/or palettes scan orders for the Chroma CBs; or the palette coding information for the single CU comprises: a palette, and/or palettes sizes, and/or palettes index maps, and/or palettes scan orders for the luma CB and Chroma CBs; and the palette coding information for the luma CU comprises: palette for the luma CB, and/or palette size, and/or palettes index maps, and/or palettes scan orders for the luma CB; the palette coding information for the chroma CU comprises: palette for the chroma CB, and/or palette size, and/or palettes index maps, and/or palettes scan orders for the chroma CB.

According to some of the above embodiments and examples, deriving a palette coding information for the single CU, luma CU or chroma CU the from bitsream comprises: parsing a palette size for the luma CB of the single CU from the bitstream, and deriving a palette size for the chroma CBs of the full based on the palette size for the luma CB of the cull CU; or parsing a palette size for the luma CU from the bitstream, and deriving a palette size for the chroma CUs associated with the luma CU based on the palette size for the luma CU.

In an exemplary implementation, the elements in the palette are ordered in a predefined monotonically order and the initial one of the elements and differences between the neighboring elements following the initial one of the elements are contained in the bit stream as coded data.

According to an embodiment, a method of decoding implemented by a decoding device is provided, comprising parsing a partition type of a current coding unit (CU) from a bitstream, wherein the partition type is either a single tree partition type or a separate tree partition type, and as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type; parsing from the bitstream a palette enabling indicator indicating if a palette coding is allowed for the luma coding block, and a palette enabling indicator indicating if a palette coding is allowed for one of the chroma coding blocks, when the partition type of the current CU is single tree partition type; or parsing from the bitstream a palette enabling indicator indicating if a palette coding is allowed for the luma CU, and a palette enabling indicator indicating if a palette coding is allowed for the chroma CU, when the partition type of the current CU is the separate tree partition type; and decoding the current CU by using a palette decoding method if the palette enabling indicator indicates a palette coding is allowed.

According to an embodiment, a method of decoding implemented by a decoding device is provided, comprising: deriving a palette coding information for the single CU, luma CU or chroma CU the from bitsream; and decoding the current CU by using a palette decoding method by using the coding information.

For example, the palette coding information for the single CU comprises: palettes for each of the luma CB and chroma CBs, and/or palettes sizes, and/or palettes index maps, and/or palettes scan orders for each of the luma CB and Chroma CBs; or the palette coding information for the single CU comprises: a palette, and/or palettes sizes, and/or palettes index maps, and/or palettes scan orders for the luma CB, a palette for the chroma CBs, and/or palettes sizes, and/or palettes index maps, and/or palettes scan orders for the Chroma CBs; or the palette coding information for the single CU comprises: a palette, and/or palettes sizes, and/or palettes index maps, and/or palettes scan orders for the luma CB and Chroma CBs; or the palette coding information for the luma CU comprises: palette for the luma CB, and/or palette size, and/or palettes index maps, and/or palettes scan orders for the luma CB; the palette coding information for the chroma CU comprises: palette for the chroma CB, and/or palette size, and/or palettes index maps, and/or palettes scan orders for the chroma CB.

For instance, the deriving a palette coding information for the single CU, luma CU or chroma CU from the bitstream comprises: parsing a palette size for the luma CB of the single CU from the bitstream, and deriving a palette size for the chroma CBs of the single CU based on the palette size for the luma CB of the single CU; or parsing a palette size for the luma CU from the bitstream, and deriving a palette size for the chroma CUs associated with the luma CU based on the palette size for the luma CU.

In some embodiments, the elements in the palette are ordered in a predefined monotonically order and the initial one of the elements and differences between the neighboring elements following the initial one of the elements are contained in the bit stream as coded data.

In some embodiments, palettes index maps is coded by using run length coding (RLE) coding method which employs at least one of syntaxes containing num_indexes array, last_run_type value, s_points array, and runs array.

According to an embodiment, a method of decoding implemented by a decoding device is provided for decoding a current coding unit (CU), wherein the current CU is either a single tree partition type or a separate tree partition type, and, as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type, for each of the luma coding block and the chroma coding blocks, comprising parsing, for each of the luma coding block and the chroma coding blocks, from a bitstream an escape indicator indicating the associated sample in a coding block is coded out of palette; and decoding the corresponding coding block of the current CU by using a coding method other than the palette decoding method if the escape indicator indicates the associated sample in a coding block is coded out of palette.

Another method is provided for decoding implemented by a decoding device for decoding a current coding unit (CU), wherein the current CU is either a single tree partition type or a separate tree partition type, and, as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type, for each of the luma coding block and the chroma coding blocks, the method comprising parsing, for all of the luma coding block and the chroma coding blocks, from a bitstream an escape indicator indicating the associated sample in a coding block is coded out of palette when the current CU is a signal CU; or parsing, from a bitstream an escape indicator the associated sample in a coding block is coded out of palette when the current CU is a luma CU or a chroma CU; decoding the current CU by using a coding method other than the palette decoding method if the escape indicator indicates the associated sample in a coding block is coded out of palette.

According to an embodiment, a method of decoding implemented by a decoding device is provided for decoding a current coding unit (CU), wherein the current CU is either a single tree partition type or a separate tree partition type, and, as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type, for each of the luma coding block and the chroma coding blocks, comprising parsing, for the luma coding block of the current CU, from a bitstream an escape indicator indicating if the associated sample in a coding block is coded out of palette, and parsing for the chroma coding block of the current, from a bitstream an escape indicator indicating if the associated sample in a coding block is coded out of palette, when the current CU is a signal CU; or parsing, from a bitstream an escape indicator indicating if the associated sample in a coding block is coded out of palette when the current CU is a luma CU or a chroma CU; decoding luma coding block or chroma coding block or the luma CU or chroma CU by using a coding method other than the palette decoding method if the escape indicator indicates the associated sample in a coding block is coded out of palette.

According to an embodiment, a method of decoding implemented by a decoding device is provided for decoding a current coding unit (CU), wherein the current CU is either a single tree partition type or a separate tree partition type, and, as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type, for each of the luma coding block and the chroma coding blocks, comprising parsing, from a bitstream an escape indicator indicating if the associated sample in a coding block is coded out of palette when the current CU is a luma CU; decoding the luma CU by using a coding method other than the palette decoding method if the escape indicator indicates the associated sample in a coding block is coded out of palette.

For example, the method may further comprise deriving an escape indicator indicating if the associated sample in a coding block is coded out of palette on the basis of the escape indicator of the luma CU associated with the chroma CU.

For example the deriving an escape indicator indicating if the associated sample in a coding block is coded out of palette on the basis of the escape indicator of the luma CU associated with the chroma CU comprises: when the chroma CU is completely covered by the luma CU, the escape indicator for chroma CU is the same as the escape indicator for the luma CU; or when the chroma CU is minimally covered by more than one luma CUs including the luma CU, and when all of the luma CUs have same indicators (same value), the escape indicator for the chroma CU is the same as the indictor for the luma CUs; or when the chroma CU is minimally covered by more than one luma CUs including the luma CU, but if not all luma CUs have same indicators, parsing the escape indicator for the chroma CU from the bitstream, or setting the indictor for the chroma CU as the indictors majorly used for the luma CUs, or setting the indictor of a luma CU out of the luma CUs as the indictor for the chroma CU based on a predefined condition, or setting the indictor of a luma CU out of the luma CUs as the indictor for the chroma CU based on a weighted function of indicators for luma CUs, where weights for indictors of each luma CUs are determined by spatial correspondence between the chroma CU and the luma CUs; or setting the indictor of the luma CU as the indictor for the chroma CU when the luma CU covers the top left or central sample of the chroma CU; or deriving the indictor of the luma CU as the indictor for the chroma CU when the luma CU covers the top left or central sample of the chroma CU by any of the following ways: a) when the escape indicator of the luma CU equals to 0, then the indictor for the chroma CU is set to be 0; b) when the indictor of the luma CU equals to 0, parsing the indictor for the chroma CU from the bit stream; c) when the escape indicator of the luma CU equals to 1, the indictor for the chroma CU is set to be 1; d) when the escape indicator of the luma CU equals to 1, parsing the indictor for the chroma CU from the bit stream.

For example, when the chroma CU is minimally covered by more than one luma CUs including the luma CU, but if not all luma CUs have same indicators, setting the indictor of a luma CU out of the luma CUs as the indictor for the chroma CU based on a predefined condition comprise: setting the indictor of a luma CU out of the luma CUs as the indictor for the chroma CU based on a ratio of indicators of same value (true/false), when the ratio is above than a predefined threshold, the indictor for chroma CU is set as the escape indicator majorly used by the luma CUs, otherwise, parsing the indictor for the chroma CU from the bit stream.

According to an embodiment, a method of decoding implemented by a decoding device is provided, comprising parsing a partition type of a current coding unit (CU) from a bitstream, wherein the partition type is either a single tree partition type or a separate tree partition type, and as being the single tree partition type the current CU is a single CU including a luma coding block and two chroma coding blocks, or as being the separate tree partition type the current CU is a luma CU including a luma coding block only or a chroma CU including two chroma coding blocks only in a separate partition type; parsing from the bitstream an palette scan order for each of the luma coding block and chroma coding blocks in the single CU when the partition type of the current CU is single tree partition type; or parsing from the bitstream an palette scan order for the luma CU when the partition type of the current CU is the separate tree partition type; and decoding the current CU by using a palette decoding method based on the palette scan order.

For instance, the method further comprises inferring a palette scan order as a predefined scan order for the chroma CU, and decoding the chroma CU based on the palette scan order.

The method may further comprise deriving a palette scan order for the chroma CU on the basis of the palette scan order of the luma CU associated with the chroma CU.

In one or more of the above-mentioned methods, deriving a palette scan order for the chroma CU on the basis of the palette scan order of the luma CU associated with the chroma CU, comprises: when the chroma CU is completely covered by the luma CU, the palette scan order for chroma CU is the same as the palette scan order for the luma CU; or when the chroma CU is minimally covered by more than one luma CUs including the luma CU, and when all of the luma CUs have same palette scan order (same value), the palette scan order for the chroma CU is the same as the palette scan order for the luma CUs; or when the chroma CU is minimally covered by more than one luma CUs including the luma CU, but if not all luma CUs have same palette scan order, parsing the palette scan order for the chroma CU from the bitstream, or setting the palette scan order for the chroma CU as the palette scan order majorly used for the luma CUs, or setting the palette scan order of a luma CU out of the luma CUs as the palette scan order for the chroma CU based on a predefined condition, or setting the palette scan order of a luma CU out of the luma CUs as the palette scan order for the chroma CU based on a weighted function of indicators for luma CUs, where weights for palette scan order of each luma CUs are determined by spatial correspondence between the chroma CU and the luma CUs; or setting the palette scan order of the luma CU as the palette scan order for the chroma CU when the luma CU covers the top left or central sample of the chroma CU.

In some embodiments, when the chroma CU is minimally covered by more than one luma CUs including the luma CU, but if not all luma CUs have same palette scan orders, setting the palette scan order of a luma CU out of the luma CUs as the palette scan order for the chroma CU based on a predefined condition comprise: setting the palette scan order of a luma CU out of the luma CUs as the palette scan order for the chroma CU based on a ratio of indicators of same value (true/false), when the ratio is above than a predefined threshold, the palette scan order for the chroma CU is set as the palette scan order majorly used by the luma CUs, otherwise, parsing the palette scan order for the chroma CU from the bit stream.

According to an embodiment, a decoding device is provided comprising a processor and a memory coupled with the process, and soring instructions that is executed by the processor to perform any of the above mentioned decoding methods.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

In summary, the present disclosure relates to decoding and encoding methods as well as to decoding and encoding apparatuses and to a program. In particular, a partitioning type of a subject coding unit, CU, is determined. The partitioning type is either a single partitioning type, in which a subject coding unit is partitioned into a single CU including one luma coding block, CB, and two chroma CBs, or a separate partitioning type, in which a subject coding unit is partitioned into a separate luma CU including a luma CB only and a chroma CU including two chroma CBs only. Based on the partitioning type of the subject CU, the subject CU and an associated palette coding information are decoded from a bitstream (in case of the decoding method / apparatus) or inserted into the bitstream (in case of the encoding method / apparatus).

Following is an explanation of the applications of the encoding method as well as the decoding method as shown in the above-mentioned embodiments, and a system using them.

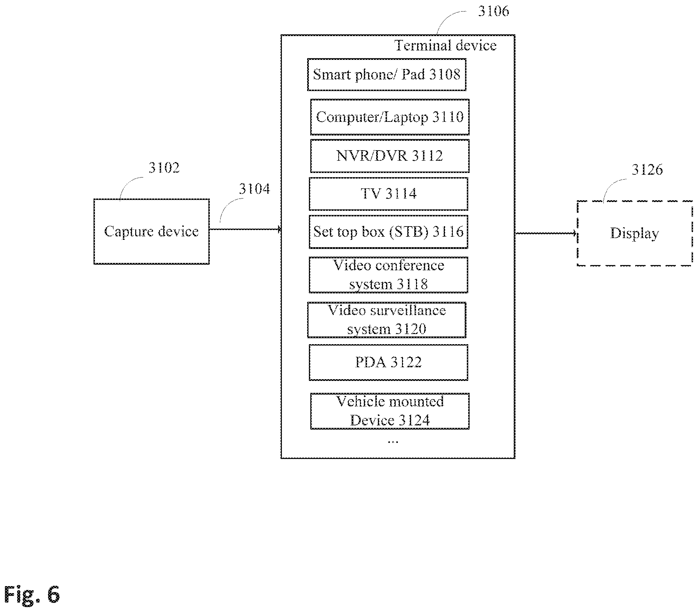

FIG. 6 s a block diagram showing a content supply system 3100 for realizing content distribution service. This content supply system 3100 includes capture device 3102, terminal device 3106, and optionally includes display 3126. The capture device 3102 communicates with the terminal device 3106 over communication link 3104. The communication link may include the communication channel 13 described above. The communication link 3104 includes but not limited to WIFI, Ethernet, Cable, wireless (3G/4G/5G), USB, or any kind of combination thereof, or the like.

The capture device 3102 generates data, and may encode the data by the encoding method as shown in the above embodiments. Alternatively, the capture device 3102 may distribute the data to a streaming server (not shown in the Figures), and the server encodes the data and transmits the encoded data to the terminal device 3106. The capture device 3102 includes but not limited to camera, smart phone or Pad, computer or laptop, video conference system, PDA, vehicle mounted device, or a combination of any of them, or the like. For example, the capture device 3102 may include the source device 12 as described above. When the data includes video, the video encoder 20 included in the capture device 3102 may actually perform video encoding processing. When the data includes audio (i.e., voice), an audio encoder included in the capture device 3102 may actually perform audio encoding processing. For some practical scenarios, the capture device 3102 distributes the encoded video and audio data by multiplexing them together. For other practical scenarios, for example in the video conference system, the encoded audio data and the encoded video data are not multiplexed. Capture device 3102 distributes the encoded audio data and the encoded video data to the terminal device 3106 separately.

In the content supply system 3100, the terminal device 310 receives and reproduces the encoded data. The terminal device 3106 could be a device with data receiving and recovering capability, such as smart phone or Pad 3108, computer or laptop 3110, network video recorder (NVR)/ digital video recorder (DVR) 3112, TV 3114, set top box (STB) 3116, video conference system 3118, video surveillance system 3120, personal digital assistant (PDA) 3122, vehicle mounted device 3124, or a combination of any of them, or the like capable of decoding the above-mentioned encoded data. For example, the terminal device 3106 may include the destination device 14 as described above. When the encoded data includes video, the video decoder 30 included in the terminal device is prioritized to perform video decoding. When the encoded data includes audio, an audio decoder included in the terminal device is prioritized to perform audio decoding processing.

For a terminal device with its display, for example, smart phone or Pad 3108, computer or laptop 3110, network video recorder (NVR)/ digital video recorder (DVR) 3112, TV 3114, personal digital assistant (PDA) 3122, or vehicle mounted device 3124, the terminal device can feed the decoded data to its display. For a terminal device equipped with no display, for example, STB 3116, video conference system 3118, or video surveillance system 3120, an external display 3126 is contacted therein to receive and show the decoded data.

When each device in this system performs encoding or decoding, the picture encoding device or the picture decoding device, as shown in the above-mentioned embodiments, can be used.

FIG. 6 is a diagram showing a structure of an example of the terminal device 3106. After the terminal device 3106 receives stream from the capture device 3102, the protocol proceeding unit 3202 analyzes the transmission protocol of the stream. The protocol includes but not limited to Real Time Streaming Protocol (RTSP), Hyper Text Transfer Protocol (HTTP), HTTP Live streaming protocol (HLS), MPEG-DASH, Real-time Transport protocol (RTP), Real Time Messaging Protocol (RTMP), or any kind of combination thereof, or the like.

After the protocol proceeding unit 3202 processes the stream, stream file is generated. The file is outputted to a demultiplexing unit 3204. The demultiplexing unit 3204 can separate the multiplexed data into the encoded audio data and the encoded video data. As described above, for some practical scenarios, for example in the video conference system, the encoded audio data and the encoded video data are not multiplexed. In this situation, the encoded data is transmitted to video decoder 3206 and audio decoder 3208 without through the demultiplexing unit 3204.

Via the demultiplexing processing, video elementary stream (ES), audio ES, and optionally subtitle are generated. The video decoder 3206, which includes the video decoder 30 as explained in the above mentioned embodiments, decodes the video ES by the decoding method as shown in the above-mentioned embodiments to generate video frame, and feeds this data to the synchronous unit 3212. The audio decoder 3208, decodes the audio ES to generate audio frame, and feeds this data to the synchronous unit 3212. Alternatively, the video frame may store in a buffer (not shown in FIG. Y) before feeding it to the synchronous unit 3212. Similarly, the audio frame may store in a buffer (not shown in FIG. Y) before feeding it to the synchronous unit 3212.

The synchronous unit 3212 synchronizes the video frame and the audio frame, and supplies the video/audio to a video/audio display 3214. For example, the synchronous unit 3212 synchronizes the presentation of the video and audio information. Information may code in the syntax using time stamps concerning the presentation of coded audio and visual data and time stamps concerning the delivery of the data stream itself.

If subtitle is included in the stream, the subtitle decoder 3210 decodes the subtitle, and synchronizes it with the video frame and the audio frame, and supplies the video/audio/subtitle to a video/audio/subtitle display 3216.

The present invention is not limited to the above-mentioned system, and either the picture encoding device or the picture decoding device in the above-mentioned embodiments can be incorporated into other system, for example, a car system.

## Claims

1. A method of decoding implemented by a decoding device, comprising:
determining a partitioning type of a current coding unit, CU, wherein
the partitioning type is either
single partitioning type, in which a current coding unit is partitioned into a single CU including one luma coding block, CB, and two chroma CBs, or
separate partitioning type, in which a current coding unit is partitioned into a separate luma CU including a luma CB only and a chroma CU including two chroma CBs only; and
decoding, based on the partitioning type of the current CU, the current CU and an associated palette coding information from a bitstream;
wherein the associated palette coding information comprises palette coding info syntax elements, the palette coding info syntax elements include any of or any combination of palette predictor vector, palette sizes, escape flag, index maps, and
the palette coding info syntax elements are signaled in the bitstream based on the partitioning type of the current CU.

2. The method according to claim 1, wherein,
when the partitioning type of the current CU is the single partitioning type, the palette coding info syntax elements are signaled in the bitstream for the current CU once for Y, Cb, Cr components together.

3. The method according to claim 1, wherein,
when the partitioning type of the current CU is the separate partitioning type, the palette coding info syntax elements are signaled in the bitstream for the current CU twice: once for Y component and once for Cb-Cr components together.

4. The method according to claim 1 or claim 2, wherein,
when the partitioning type of the current CU is the separate partitioning type, the palette coding info syntax elements are signaled in the bitstream for the luma CU once for Y component.

5. The method according to any of claims 1 to 3, wherein,
when the partitioning type of the current CU is the separate partitioning type, the palette coding info syntax elements are signaled in the bitstream once for Cb-Cr components together in the chroma CU.

6. The method according to any of claims 1 to 5, wherein,
when the partitioning type of the current CU is the separate partitioning type, the palette coding info syntax elements signaling for the chroma CU depends on a palette coding control flag of the luma CU of the current CU.

7. The method according to claim 6, wherein
when the partitioning type of the current CU is the separate partitioning type, the palette coding info syntax elements signaling for the chroma CU depends on the palette coding control flag of the luma CU of the current CU according to following rule:
if all luma CBs of the current CU have palette coding control flag equal to 1, then signal, in the bitstream, a palette coding control flag for the chroma CBs;
otherwise, do not use palette coding for the chroma CBs.

8. The method according to claim 6, wherein
when the partitioning type of the current CU is the separate partitioning type, the palette coding info syntax elements signaling for the chroma CU depends on the palette coding control flag of the luma CU of the current CU according to following rule:
if all luma CBs of the current CU have palette coding control flag equal to 1, then infer a palette coding control flag for the chroma CBs to be equal 1, and signal, in the bitstream, the palette coding info syntax elements for the chroma CBs;
otherwise signal, in the bitstream, the palette coding control flag for the chroma CBs.

9. A method of coding implemented by an encoding device, comprising:
determining a partitioning type of a current coding unit, CU; and
partitioning the current CU into either
a single CU including one luma coding block, CB, and two chroma CBs in a single partitioning type, or
a separate luma CU including the luma CB only and a chroma CU including the two chroma CBs only in a separate partitioning type; and
encoding the current CU and the associated palette coding information into a bitstream depending on the partition type of the current CU;
wherein the associated palette coding information comprises palette coding info syntax elements, the palette coding info syntax elements include any of or any combination of: palette predictor vector, palette sizes, escape flag, index maps, and the palette coding info syntax elements are signaled in the bitstream based on the partitioning type of the current CU.

10. A program stored on a non-transitory medium including code with instructions which, when executed by one or more processors, cause the one or more processors to perform the method according to any of claims 1 to 9.

11. A decoding device, including a processing circuitry configured to:
determine a partitioning type of a current coding unit, CU, wherein
the partitioning type is either
single partitioning type, in which a current coding unit is partitioned into a single CU including one luma coding block, CB, and two chroma CBs, or
separate partitioning type, in which a current coding unit is partitioned into a separate luma CU including a luma CB only and a chroma CU including two chroma CBs only; and
decode, based on the partitioning type of the current CU, the current CU and an associated palette coding information from a bitstream , wherein
the associated palette coding information comprises palette coding info syntax elements, the palette coding info syntax elements include any of or any combination of: palette predictor vector, palette sizes, escape flag, index maps, and
the palette coding info syntax elements are signaled in the bitstream based on the partitioning type of the current CU.

12. The decoding device according to claim 11, wherein, when the partitioning type of the current CU is the single partitioning type, the palette coding info syntax elements are signaled in the bitstream for the current CU once for Y, Cb, Cr components together.

13. The decoding device according to claim 11, wherein, when the partitioning type of the current CU is the separate partitioning type, the palette coding info syntax elements are signaled in the bitstream for the current CU twice: once for Y component and once for Cb-Cr components together.

14. An encoding device, including a processing circuitry configured to
determine a partitioning type of a current coding unit, CU,
partition the current CU into either
a single CU including one luma coding block, CB, and two chroma CBs, in a single partition type, or
a separate luma CU including the luma CB only and a chroma CU including the two chroma CBs only in a separate partition type; and to
encode the current CU and an associated palette coding information into a bitstream depending on the partition type of the current CU;
wherein the associated palette coding information comprises palette coding info syntax elements, the palette coding info syntax elements include any of or any combination of: palette predictor vector, palette sizes, escape flag, index maps, and
the palette coding info syntax elements are signaled in the bitstream based on the partitioning type of the current CU.

## Patentansprüche

1. Verfahren zum Decodieren, umgesetzt durch eine Decodierungsvorrichtung, das Folgendes umfasst:
Bestimmen eines Zerlegungstyps einer aktuellen Codierungseinheit, CU, wobei
der Zerlegungstyp einer aus Folgendem ist:
einzelner Zerlegungstyp, bei dem eine aktuelle Codierungseinheit in eine einzelne CU zerlegt wird, umfassend einen Luma-Codierungsblock, CB, und zwei Chroma-CBs, oder
getrennter Zerlegungstyp, bei dem eine aktuelle Codierungseinheit in eine separate Luma-CU, umfassend nur eine Luma-CB, und eine Chroma-CU, umfassend nur zwei Chroma-CBs, zerlegt wird; und
Decodieren, basierend auf dem Zerlegungstyp der aktuellen CU, der aktuellen CU und von verknüpften Palettencodierungsinformationen aus einem Bitstrom;
wobei die verknüpften Palettencodierungsinformationen Palettencodierungsinfo-Syntaxelemente umfassen, wobei die Palettencodierungsinfo-Syntaxelemente beliebige aus oder eine beliebige Kombination von Folgendem umfassen:
Palettenprädiktorvektor, Palettengrößen, Escape-Kennzeichen, Indexabbildungen und wobei die Palettencodierungsinfo-Syntaxelemente in dem Bitstrom basierend auf dem Zerlegungstyp der aktuellen CU signalisiert werden.

2. Verfahren nach Anspruch 1, wobei,
wenn der Zerlegungstyp der aktuellen CU der einzelne Zerlegungstyp ist, die Palettencodierungsinfo-Syntaxelemente im Bitstrom für die aktuelle CU einmal für die Y-, Cb-, Cr-Komponenten zusammen signalisiert werden.

3. Verfahren nach Anspruch 1, wobei,
wenn der Zerlegungstyp der aktuellen CU der separate Zerlegungstyp ist, die Palettencodierungsinfo-Syntaxelemente im Bitstrom für die aktuelle CU zweimal signalisiert werden: einmal für die Y-Komponente und einmal für die Cb-Cr-Komponenten zusammen.

4. Verfahren nach Anspruch 1 oder Anspruch 2, wobei,
wenn der Zerlegungstyp der aktuellen CU der separate Zerlegungstyp ist, die Palettencodierungsinfo-Syntaxelemente im Bitstrom für die Luma-CU einmal für die Y-Komponente signalisiert werden.

5. Verfahren nach einem der Ansprüche 1 bis 3, wobei,
wenn der Zerlegungstyp der aktuellen CU der separate Zerlegungstyp ist, die Palettencodierungsinfo-Syntaxelemente im Bitstrom einmal für Cb-Cr-Komponenten zusammen in der Chroma-CU signalisiert werden.

6. Verfahren nach einem der Ansprüche 1 bis 5, wobei,
wenn der Zerlegungstyp der aktuellen CU der separate Zerlegungstyp ist, das Signalisieren der Palettencodierungsinfo-Syntaxelemente für die Chroma-CU von einem Palettencodierungs-Steuerkennzeichen der Luma-CU der aktuellen CU abhängt.

7. Verfahren nach Anspruch 6, wobei:
wenn der Zerlegungstyp der aktuellen CU der separate Zerlegungstyp ist, das Signalisieren der Palettencodierungsinfo-Syntaxelemente für die Chroma-CU von dem Palettencodierungs-Steuerkennzeichen der Luma-CU der aktuellen CU entsprechend der folgenden Regel abhängt:
wenn alle Luma-CBs der aktuellen CU ein Palettencodierungs-Steuerkennzeichen gleich 1 haben, dann Signalisieren, im Bitstrom, eines Palettencodierungs-Steuerkennzeichens für die Chroma-CBs;
andernfalls Palettencodierung nicht für die Chroma-CBs verwenden.

8. Verfahren nach Anspruch 6, wobei:
wenn der Zerlegungstyp der aktuellen CU der separate Zerlegungstyp ist, das Signalisieren der Palettencodierungsinfo-Syntaxelemente für die Chroma-CU von dem Palettencodierungs-Steuerkennzeichen der Luma-CU der aktuellen CU entsprechend der folgenden Regel abhängt:
wenn alle Luma-CBs der aktuellen CU ein Palettencodierungs-Steuerkennzeichen gleich 1 haben, schlussfolgern, dass ein Palettencodierungs-Steuerkennzeichen für die Chroma-CBs gleich 1 ist, und Signalisieren, im Bitstrom, der Palettencodierungsinfo-Syntaxelemente für die Chroma-CBs;
andernfalls Signalisieren, im Bitstrom, des Palettencodierungs-Steuerkennzeichens für die Chroma-CBs.

9. Verfahren zum Codieren, umgesetzt durch eine Codierungsvorrichtung, Folgendes umfassend:
Bestimmen eines Zerlegungstyps einer aktuellen Codierungseinheit, CU, und
Zerlegen der aktuellen CU in eines aus Folgendem:
eine einzelne CU, umfassend einen Luma-Codierungsblock, CB, und zwei Chroma-CBs in einem einzelnen Zerlegungstyp, oder
eine getrennte Luma-CU, umfassend nur den Luma-CB, und eine Chroma-CU, umfassend nur die zwei Chroma-CBs, in einem getrennten Zerlegungstyp; und
Codieren der aktuellen CU und der verknüpften Palettencodierungsinformationen in einen Bitstrom in Abhängigkeit vom Zerlegungstyp der aktuellen CU;
wobei die verknüpften Palettencodierungsinformationen Palettencodierungsinfo-Syntaxelemente umfassen, wobei die Palettencodierungsinfo-Syntaxelemente beliebige aus oder eine beliebige Kombination von Folgendem umfassen:
Palettenprädiktorvektor, Palettengrößen, Escape-Kennzeichen, Indexabbildungen und wobei die Palettencodierungsinfo-Syntaxelemente in dem Bitstrom basierend auf dem Zerlegungstyp der aktuellen CU signalisiert werden.

10. Programm, gespeichert auf einem nicht-flüchtigen Medium, umfassend Code mit Anweisungen, die, wenn durch einen oder mehrere Prozessoren ausgeführt, den einen oder die mehreren Prozessoren veranlassen, das Verfahren nach einem der Ansprüche 1 bis 9 durchzuführen.

11. Decodierungsvorrichtung, umfassend eine Verarbeitungsschaltungsanordnung, ausgelegt zum:
Bestimmen eines Zerlegungstyps einer aktuellen Codierungseinheit, CU, wobei der Zerlegungstyp einer aus Folgendem ist:
einzelner Zerlegungstyp, bei dem eine aktuelle Codierungseinheit in eine einzelne CU zerlegt wird, umfassend einen Luma-Codierungsblock, CB, und zwei Chroma-CBs, oder
getrennter Zerlegungstyp, bei dem eine aktuelle Codierungseinheit in eine separate Luma-CU, umfassend nur eine Luma-CB, und eine Chroma-CU, umfassend nur zwei Chroma-CBs, zerlegt wird; und
Decodieren, basierend auf dem Zerlegungstyp der aktuellen CU, der aktuellen CU und von verknüpften Palettencodierungsinformationen aus einem Bitstrom, wobei
die verknüpften Palettencodierungsinformationen Palettencodierungsinfo-Syntaxelemente umfassen, wobei die Palettencodierungsinfo-Syntaxelemente beliebige aus oder eine beliebige Kombination von Folgendem umfassen:
Palettenprädiktorvektor, Palettengrößen, Escape-Kennzeichen, Indexabbildungen und wobei die Palettencodierungsinfo-Syntaxelemente in dem Bitstrom basierend auf dem Zerlegungstyp der aktuellen CU signalisiert werden.

12. Decodierungsvorrichtung nach Anspruch 11, wobei, wenn der Zerlegungstyp der aktuellen CU der einzelne Zerlegungstyp ist, die Palettencodierungsinfo-Syntaxelemente im Bitstrom für die aktuelle CU einmal für die Y-, Cb-, Cr-Komponenten zusammen signalisiert werden.

13. Decodierungsvorrichtung nach Anspruch 11, wobei, wenn der Zerlegungstyp der aktuellen CU der separate Zerlegungstyp ist, die Palettencodierungsinfo-Syntaxelemente im Bitstrom für die aktuelle CU zweimal signalisiert werden: einmal für die Y-Komponente und einmal für die Cb-Cr-Komponenten zusammen.

14. Codierungsvorrichtung, umfassend eine Verarbeitungsschaltungsanordnung, ausgelegt zum
Bestimmen eines Zerlegungstyps einer aktuellen Codierungseinheit, CU,
Zerlegen der aktuellen CU in eines aus Folgendem:
eine einzelne CU, umfassend einen Luma-Codierungsblock, CB, und zwei Chroma-CBs, in einem einzelnen Zerlegungstyp, oder
eine getrennte Luma-CU, umfassend nur den Luma-CB, und eine Chroma-CU, umfassend nur die zwei Chroma-CBs, in einem getrennten Zerlegungstyp; und
Codieren der aktuellen CU und von verknüpften Palettencodierungsinformationen in einen Bitstrom in Abhängigkeit vom Zerlegungstyp der aktuellen CU;
wobei die verknüpften Palettencodierungsinformationen Palettencodierungsinfo-Syntaxelemente umfassen, wobei die Palettencodierungsinfo-Syntaxelemente beliebige aus oder eine beliebige Kombination von Folgendem umfassen:
Palettenprädiktorvektor, Palettengrößen, Escape-Kennzeichen, Indexabbildungen und wobei die Palettencodierungsinfo-Syntaxelemente in dem Bitstrom basierend auf dem Zerlegungstyp der aktuellen CU signalisiert werden.

## Revendications

1. Procédé de décodage mis en oeuvre par un dispositif de décodage, comprenant :
la détermination d'un type de partitionnement d'une unité de codage, CU, actuelle, le type de partitionnement étant
un type de partitionnement unique, dans lequel une unité de codage actuelle est partitionnée en une unique CU comprenant un bloc de codage, CB, luma et deux CB chroma, ou
un type de partitionnement séparé, dans lequel une unité de codage actuelle est partitionnée en une CU luma séparée comprenant un CB luma uniquement, et une CU chroma comprenant deux CB chroma uniquement ;
et
le décodage, sur la base du type de partitionnement de la CU actuelle, de la CU actuelle et d'une information de codage de palette associée à partir d'un flux binaire ;
l'information de codage de palette associée comprenant des éléments syntaxiques d'information de codage de palette, les éléments syntaxiques d'information de codage de palette comprenant n'importe lequel ou n'importe quelle combinaison de : vecteur prédicteur de palette, tailles de palette, drapeau d'échappement, cartes d'index, et
les éléments syntaxiques d'information de codage de palette étant signalés dans le flux binaire sur la base du type de partitionnement de la CU actuelle.

2. Procédé selon la revendication 1,
lorsque le type de partitionnement de la CU actuelle est le type de partitionnement unique, les éléments syntaxiques d'information de codage de palette sont signalés dans le flux binaire pour la CU actuelle une fois pour les composantes Y, Cb, Cr ensemble.

3. Procédé selon la revendication 1,
lorsque le type de partitionnement de la CU actuelle est le type de partitionnement séparé, les éléments syntaxiques d'information de codage de palette sont signalés dans le flux binaire de la CU actuelle deux fois : une fois pour la composante Y et une fois pour les composantes Cb-Cr ensemble.

4. Procédé selon la revendication 1 ou la revendication 2,
lorsque le type de partitionnement de la CU actuelle est le type de partitionnement séparé, les éléments syntaxiques d'information de codage de palette sont signalés dans le flux binaire pour la CU luma une fois pour la composante Y.

5. Procédé selon l'une quelconque des revendications 1 à 3,
lorsque le type de partitionnement de la CU actuelle est le type de partitionnement séparé, les éléments syntaxiques d'information de codage de palette sont signalés dans le flux binaire une fois pour les composantes Cb-Cr ensemble dans la CU chroma.

6. Procédé selon l'une quelconque des revendications 1 à 5,
lorsque le type de partitionnement de la CU actuelle est le type de partitionnement séparé, la signalisation des éléments syntaxiques d'information de codage de palette pour la CU chroma est fonction d'un drapeau de contrôle de codage de palette de la CU luma de la CU actuelle.

7. Procédé selon la revendication 6,
lorsque le type de partitionnement de la CU actuelle est le type de partitionnement séparé, la signalisation des éléments syntaxiques d'information de codage de palette pour la CU chroma est fonction du drapeau de contrôle de codage de palette de la CU luma de la CU actuelle conformément à la règle suivante :
si tous les CB luma de la CU actuelle ont un drapeau de contrôle de codage de palette égal à 1, alors signaler, dans le flux binaire, un drapeau de contrôle de codage de palette pour les CB chroma ;
sinon, ne pas utiliser le codage de palette pour les CB chroma.

8. Procédé selon la revendication 6,
lorsque le type de partitionnement de la CU actuelle est le type de partitionnement séparé, la signalisation des éléments syntaxiques d'information de codage de palette pour la CU chroma est fonction du drapeau de contrôle de codage de palette de la CU luma de la CU actuelle selon la règle suivante :
si tous les CB luma de la CU actuelle ont un drapeau de contrôle de codage de palette égal à 1, déduire un drapeau de contrôle de codage de palette pour les CB chroma égal à 1 et signaler, dans le flux binaire, les éléments syntaxiques d'information de codage de palette pour les CB chroma ;
sinon, signaler, dans le flux binaire, le drapeau de contrôle de codage de palette pour les CB chroma.

9. Procédé de codage mis en oeuvre par un dispositif de codage, comprenant :
la détermination d'un type de partitionnement d'une unité de codage, CU, actuelle ; et
le partitionnement de la CU actuelle en
une unique CU comprenant un bloc de codage, CB, luma et deux CB chroma dans un type de partitionnement unique, ou
une CU luma séparée comprenant le CB luma uniquement et une CU chroma comprenant les deux CB chroma uniquement dans un type de partitionnement séparé ; et
le codage de la CU actuelle et de l'information de codage de palette associée dans un flux binaire en fonction du type de partition de la CU actuelle ;
l'information de codage de palette associée comprenant des éléments syntaxiques d'information de codage de palette, les éléments syntaxiques d'information de codage de palette comprenant n'importe lequel ou n'importe quelle combinaison de : vecteur prédicteur de palette, tailles de palette, drapeau d'échappement, cartes d'index, et les éléments syntaxiques d'information de codage de palette étant signalés dans le flux binaire sur la base du type de partitionnement de la CU actuelle.

10. Programme stocké sur un support non transitoire comprenant un code avec des instructions qui, lorsqu'elles sont exécutées par un ou plusieurs processeurs, amènent le ou les processeurs à réaliser le procédé selon l'une quelconque des revendications 1 à 9.

11. Dispositif de décodage, comprenant un circuit de traitement configuré pour :
déterminer un type de partitionnement d'une unité de codage, CU, actuelle, le type de partitionnement étant
un type de partitionnement unique, dans lequel une unité de codage actuelle est partitionnée en une unique CU comprenant un bloc de codage, CB, luma et deux CB chroma, ou
un type de partitionnement séparé, dans lequel une unité de codage actuelle est partitionnée en une CU luma séparée comprenant un CB luma uniquement et une CU chroma comprenant deux CB chroma uniquement ; et
décoder, sur la base du type de partitionnement de la CU actuelle, la CU actuelle et une information de codage de palette associée à partir d'un flux binaire,
l'information de codage de palette associée comprenant des éléments syntaxiques d'information de codage de palette, les éléments syntaxiques d'information de codage de palette comprenant n'importe lequel ou n'importe quelle combinaison de : vecteur prédicteur de palette, tailles de palette, drapeau d'échappement, cartes d'index, et
les éléments syntaxiques d'information de codage de palette étant signalés dans le flux binaire sur la base du type de partitionnement de la CU actuelle.

12. Dispositif de décodage selon la revendication 11, lorsque le type de partitionnement de la CU actuelle est le type de partitionnement unique, les éléments syntaxiques d'information de codage de palette étant signalés dans le flux binaire pour la CU actuelle une fois pour les composantes Y, Cb, Cr ensemble.

13. Dispositif de décodage selon la revendication 11, lorsque le type de partitionnement de la CU actuelle est le type de partitionnement séparé, les éléments syntaxiques d'information de codage de palette sont signalés dans le flux binaire pour la CU actuelle deux fois : une fois pour la composante Y et une fois pour les composantes Cb-Cr ensemble.

14. Dispositif de codage, comprenant un circuit de traitement configuré pour
déterminer un type de partitionnement d'une unité de codage, CU, actuelle, partitionner la CU actuelle en
une unique CU comprenant un bloc de codage, CB, luma et deux CB chroma, dans un type de partition unique, ou
une CU luma séparée comprenant uniquement le CB luma et une CU chroma comprenant uniquement les deux CB chroma dans un type de partition séparé ; et pour coder la CU actuelle et une information de codage de palette associée dans un flux binaire en fonction du type de partition de la CU actuelle ;
l'information de codage de palette associée comprenant des éléments syntaxiques d'information de codage de palette, les éléments syntaxiques d'information de codage de palette comprenant n'importe lequel ou n'importe quelle combinaison de : vecteur prédicteur de palette, tailles de palette, drapeau d'échappement, cartes d'index, et les éléments syntaxiques d'information de codage de palette étant signalés dans le flux binaire sur la base du type de partitionnement de la CU actuelle.
